# EUROPEAN PATENT APPLICATION

(11) **EP 4 718 909 A1**
(43) Date of publication of application: **01.04.2026**
(21) Application number: 24203209.2
(22) Date of filing: 27.09.2024
(51) Int. Cl.: H04W 36/00, H04W 36/30, H04W 24/10

(54) **COMMUNICATION APPARATUSES INVOLVED IN A MEASUREMENT GAP SKIPPING PROCEDURE**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to a communication apparatus comprising the following. A transceiver of the communication apparatus, in operation, receives one or more signals conveying a measurement gap skipping indication, which indicates to skip at least one measurement gap, MG. A processing circuitry of the communication apparatus, in operation, determines, by using a reception timing of the measurement gap skipping indication, to skip at least one measurement gap among a plurality of configured measurement gaps, which are configured in a time period following the reception timing of the measurement gap skipping indication.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand broad bandwidth, while they are different in that the URLLC service may preferably require ultra-low latencies.

A second objective is to achieve forward compatibility, which facilitates a completely new system design and/or the introduction of novel features.

### Summary

One non-limiting and exemplary embodiment facilitates providing procedures for a UE to perform improved data transmission and reception procedures.

In an embodiment, the techniques disclosed here feature a communication apparatus comprising the following. A transceiver of the communication apparatus, in operation, receives one or more signals conveying a measurement gap skipping indication, which indicates to skip at least one measurement gap, MG. A processing circuitry of the communication apparatus, in operation, determines, by using a reception timing of the measurement gap skipping indication, to skip at least one measurement gap among a plurality of configured measurement gaps, which are configured in a time period following the reception timing of the measurement gap skipping indication.

In another embodiment, the techniques disclosed here feature a communication apparatus, comprising the following. A processing circuitry of the communication apparatus, in operation, generates a measurement gap skipping indication, which indicates to skip at least one measurement gap, MG. A transceiver of the communication apparatus, in operation, transmits one or more signals conveying the measurement gap skipping indication to a terminal. The processing circuitry of the communication apparatus, in operation, further determines, by using a transmission timing of the measurement gap skipping indication, to skip at least one measurement gap among a plurality of configured measurement gaps, which are configured in a time period following the transmission timing of the measurement gap skipping indication.

It should be noted that general or specific embodiments may be implemented as a system, a method, an integrated circuit, a computer program, a storage medium, or any selective combination thereof.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### Brief description of the Figures

In the following exemplary embodiments are described in more detail with reference to the attached figures and drawings.
- **Fig. 1**: shows an exemplary architecture for a 3GPP NR system to which the exemplary embodiments of the present disclosure may be applied;
- **Fig. 2**: illustrates the arrival of video frame data and a configured measurement gap pattern;
- **Fig. 3**: illustrates a first example of an exemplary measurement gap skipping procedure and a possible drawback;
- **Figs. 4 and 5**: illustrate a second example of the exemplary measurement gap skipping procedure and a possible drawback;
- **Fig. 6**: illustrates an exemplary and simplified structure of a user equipment (UE) and a base station;
- **Fig. 7**: illustrates a functional structure of the circuitries pertaining to the UE;
- **Fig. 8**: illustrates a functional structure of the circuitries pertaining to the base station;
- **Fig. 9**: illustrates an exemplary and simplified flow diagram for the UE behavior according to an exemplary implementation of the present disclosure;
- **Fig. 10**: illustrates an exemplary and simplified flow diagram for the base station behavior according to an exemplary implementation of the present disclosure;
- **Fig. 11**: illustrates a first exemplary implementation of an improved measurement gap skipping procedure according to a first variant of a first solution;
- **Fig. 12**: illustrates a second exemplary implementation of the improved measurement gap skipping procedure according to the first variant of the first solution;
- **Fig. 13**: illustrates an exemplary implementation of an improved measurement gap skipping procedure according to a second variant of the first solution;
- **Fig. 14**: illustrates an exemplary implementation of an improved measurement gap skipping procedure according to a third variant of the first solution;
- **Fig. 15**: illustrates an exemplary implementation of an improved measurement gap skipping procedure according to a first variant of a second solution;
- **Fig. 16**: illustrates a first exemplary implementation of an improved measurement gap skipping procedure according to a second variant of the second solution;
- **Fig. 17**: illustrates a second exemplary implementation of an improved measurement gap skipping procedure according to the second variant of the second solution;
- **Fig. 18**: illustrates an exemplary implementation of an improved measurement gap skipping procedure according to a third solution;
- **Fig. 19**: shows exemplary functional split options in 5G open-radio access network (O-RAN).

### DETAILED DESCRIPTION

### 5G NR system architecture and protocol stacks

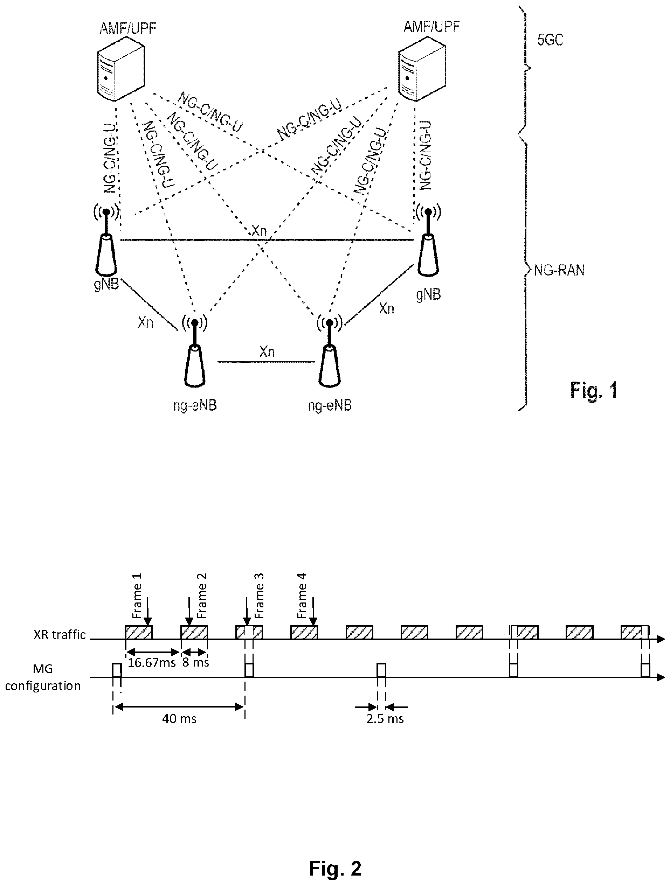

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gN Bs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

### XR - extended Reality in Rel. 18

A 3GPP study item relates to eXtended Reality (XR) in RAN 1 and RAN 2. The aim is to provide efficient communications for augmented reality (AR), virtual reality (VR), mixed reality (MR) and cloud gaming, while reducing the power consumption and increasing the system capacity. In particular, techniques are studied for XR (eXtended Reality), e.g. to accommodate XR service characteristics, such as periodicity, multiple flows, jitter, latency, reliability, etc. The considered XR applications require a high data rate in downlink (DL) and uplink (UL) with a relatively strict packet delay budget (PDB).

Furthermore, some of the XR applications run on devices with a limited source of energy, such as wearable glasses or handheld devices. Thus, energy efficiency is an important concern.

The XR applications impose a variety of data traffics, including video streams and pose/control traffics. The video frames are quite large with varying sizes. They are characterized as quasi-periodic, because video frames arrive over a jitter time window. In addition, the periodicity of the jitter time window is non-integer regarding time resource units like radio frames/slots/symbols.
- Packet size: For a high-quality video stream, the frame size would be around 1M bits after compression for an 8K video. This leads to having large size packets.
- Varying size: The frame sizes could vary e.g. due to the I-frame or P-frame/B-frame.
- Periodicities: A video stream generally generates 60/90/120 fps, which correspond to the periodicity of 16.667, 11.111, and 8.333 ms, respectively.
- Jitter: The frame packets would arrive at the gNB/UE over a jitter time window of e.g. [-4, 4] ms or even a larger jitter time window.
- Delay budget: The delay budget for delivering the XR packets could be tight, for instance, 10ms for AR/VR and 15ms for cloud gaming.

### Discontinued Reception, DRX, in LTE and 5G NR

To reduce the battery consumption in the UE, a mechanism is used to minimize the time the UE spends monitoring the PDCCH, which is called the Discontinuous Reception (DRX) functionality. UE side DRX is defined in 3GPP, e.g. in 3GPP Technical Standard TS 36.321, 17.5.0, chapter 5.7, as well as in 3GPP TS 38.331 v17.5.0 (see e.g. *DRX-Config* Information Element in section 6.3.2).

DRX reduces the battery consumption of UEs by allowing them to periodically turn off their receivers for specified intervals. This intermittent receive strategy saves energy, especially in scenarios where the device may not have continuous data to receive.

Specifically, the DRX cycle is divided into two main periods: an On Duration and an Off Duration. During the On Duration, the UE's receiver is active, monitoring the channel for incoming data or control signals. In contrast, during the Off Duration, the receiver is turned off to conserve power.

DRX parameters can be configured by the base station to optimize power consumption and latency for specific use cases and network conditions. These parameters indicate the length of the on and off durations, the start timing of the DRX cycles, and the type of DRX pattern (e.g., short DRX, and long DRX).

DRX can be triggered by various events, such as a lack of data to receive, explicit commands from the network, or timers set by the UE itself. For example, if the UE has no data to transmit or receive for a certain period of time, it may enter a DRX state to save power.

While DRX helps to save power, it can also introduce latency, especially if the UE has to wait until the next on duration to receive data. Therefore, DRX parameters must be carefully configured to balance power efficiency with acceptable levels of latency and throughput.

In NR 5G, DRX mechanisms can dynamically adapt to changing network conditions and traffic patterns. For example, during periods of high network activity, such as receiving a video stream with periodically received frames, DRX parameters can be adjusted to minimize latency and maximize throughput, while during idle periods, they can be optimized for power savings.

### Measurement gap (MG)

3GPP has supports measurement gaps (which sometimes are also referred to as "measurement restrictions"). The MG is configured for the UE to perform measurements when the UE cannot simultaneously measure the target carrier frequency while transmitting/receiving on the serving cell. In other words, the MG refers to a period of time during which the device's receiver is temporarily inactive for receiving or transmitting in the serving cell, but is instead turned to perform radio measurements, in particular radio resource management (RRM) measurements, in a target carrier. The MG gap allows the device to perform various measurements without interfering with ongoing transmissions. The measurement procedure is defined in 3GPP, e.g. in 3GPP Technical Standard TS 38.133, version 18.4.0, Chapter 9.

The need for a MG in NR depends on the capability of the UE, the active BWP of the UE and the current operating frequency. In NR, MGs may be configured for performing intra-frequency, inter-frequency and inter-RAT measurements.

The UEs shall support the MG patterns listed in the following table 1:

**Table 1**

| **MG Pattern Id** | **Measurement Gap Length (MGL, ms)** | **Measurement Gap Repetition Period (MGRP, ms)** |
|---|---|---|
| 0 | 6 | 40 |
| 1 | 6 | 80 |
| 2 | 3 | 40 |
| 3 | 3 | 80 |
| 4 | 6 | 20 |
| 5 | 6 | 160 |
| 6 | 4 | 20 |
| 7 | 4 | 40 |
| 8 | 4 | 80 |
| 9 | 4 | 160 |
| 10 | 3 | 20 |
| 11 | 3 | 160 |
| 12 | 5.5 | 20 |
| 13 | 5.5 | 40 |
| 14 | 5.5 | 80 |
| 15 | 5.5 | 160 |
| 16 | 3.5 | 20 |
| 17 | 3.5 | 40 |
| 18 | 3.5 | 80 |
| 19 | 3.5 | 160 |
| 20 | 1.5 | 20 |
| 21 | 1.5 | 40 |
| 22 | 1.5 | 80 |
| 23 | 1.5 | 160 |
| 24 | 10 | 80 |
| 25 | 20 | 160 |

The UE determines the MG timing based on the gap offset configuration and the MG timing advance configuration provided by higher layer signaling. The gap offset is defined as the offset of the gap pattern. There are about 160 offset values, but all values are not applicable for all periodicities. The offset values point to the starting subframe within the period, its value range is from 0 to MGRP-1. For example, if the periodicity is 20 ms, the offset ranges from 0 to 19. If the MG timing advance (Mgta) is configured, the UE starts the measurement Mgta ms before the gap subframe occurrence i.e., the MG starts at time Mgta ms advanced to the end of the latest subframe occurring immediately before the MG. The amount of timing advance can be 0.25 ms (FR2) or 0.5 ms (FR1).

In NR, an RF re-tuning time is applied. There are various bands below 6 GHz in 4G LTE networks. In NR, frequency range 1 (FR1) overlaps and extends 4G LTE frequencies, including various bands from 450 MHz to 6,000 MHz, which is commonly referred to as NR sub-6 GHz. NR further includes a frequency range 2 (FR2) covering from 24,250 MHz to 52,600 MHz, which is commonly referred to as mm-Wave, even though the millimeter wave frequency may start at 30 GHz strictly speaking. For example, the re-tuning time is 0.5 ms for carrier frequency measurements in the FR1 range and 0.25 ms in the FR2 range. For example, a gap length of 4 ms for FR1 measurements would allow 3 ms for actual measurements and a gap length of 3.5 ms for FR2 measurements would allow 3 ms for actual measurements.

The applicability of the MG patterns is further specified (see e.g. Tables 9.1.2-2 and 9.1.2-2 of 3GPP Technical Standard TS 38.133, e.g. version 18.4.0). In particular, NR defines two types of MG, i.e., per-UE and per-FR. The per-UE gap (gapUE) is applied to both FR1 and FR2 frequencies. For the per-FR gap, two independent gap patterns are defined for FR1 (gapFR1) and FR2 (gapFR2). If the gapUE is configured, neither of gapFR1 nor gapFR2 can be configured. The MeasGapConfig IE specifies the MG configuration and controls setup/release of MG by RRC.

Typically, the UE measures reference signals (RS), which are described in more detail below.

During the MG, the MAC entity is not required to perform the following (see e.g. section 9.1.2 of 3GPP TR 38.133, e.g. version 18.4.0).
- Send HARQ feedback, SR, and CSI
- Report SRS
- Transmit on UL-SCH except for Msg3
- Receive DL-SCH
- Monitor the PDCCH except the UE is waiting for Msg2 or Msg4 during RA procedure.

Such restrictions could introduce additional delay and affect the communication performance.

### Reference Signals

Several different types of reference signals (RS) are used for 5G NR (see 3GPP TS 38.211 v17.4.0 section 7.4.1). These reference signals may be used during in the MG. At least the following reference signals are available in 5G NR:
- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH
- Tracking Reference Signal, usable for time tracking, also called "CSI-RS for tracking" (see TS 38.214)
- RIM reference signals
- Positioning reference signals

### Measurement gap skipping

As presented above, in particular for XR applications, a data stream (e.g., a video stream or an audio stream) may comprise a plurality of media frames, where each of the media frames is quite large. The data stream traffic can be characterized as quasi-periodic, where each of a plurality of media frames arrives over a jitter window. The jitter window during which each of the media frames arrives, is defined by a frame rate of frames per second (fps).

This situation is illustrated in **Fig. 2****.** For ease of illustration and understanding, exemplary assumptions are made as follows. A video stream of 60 fps is assumed, so that a video frame (also called a media frame) is generated every 1/60 s, which is approximately 16.6667 ms. The video frames are generated with a jitter time window of 8 ms.

As discussed above, the UE is configured with measurement gaps. For ease of illustration and understanding, exemplary assumptions are made as follows. A measurement gap is configured with a periodicity of 40 ms, a measurement gap length of 1.5 ms and an RF re-tuning time of 0.5 ms before and after the measurement gap, resulting in a duration of each MG of 2.5 ms.

As exemplary illustrated in **Fig. 2** for frame 3, due to the difference between the periodicities of the video stream and the configured MG pattern, a measurement gap included in the configured MG pattern might collide with the XR traffic, which imposes the delay before the data can be scheduled. This causes an additional delay in the delivery of the video frame. A similar limitation applies to uplink (UL) data transmissions. In addition, the delay can be increased when DRX functionality is enabled.

To address this issue, 3GPP considered enhancements in Rel. 19 to enable the identified enhancements with RRM performance impact taken into consideration by specifying corresponding measurement gap and scheduling restrictions. In this respect, it was agreed to consider solutions for skipping measurement gaps to enable UEs to transmit or receive data in measurement gaps, e.g. caused by RRM measurements based on a dynamic indication received by the UE.

A dynamic indication, for example, may be used to explicitly indicate a UE to skip a measurement gap, as a part of a scheduling downlink control information (DCI) message. For example, it is considered that one bit of the scheduling DCI is used to indicate the UE whether to skip the first measurement gap (restriction), which is configured after a minimum time offset required as processing time between the last symbol of the PDCCH carrying the DCI and the start of the corresponding measurement gap (which is indicated by the DCI).

### Further Improvements

Accordingly, in a possible implementation scenario, a UE may receive a DCI message, which carries a single bit, as an indication to skip a measurement gap. As a first MG skipping rule, the UE may then determine that the indication in the DCI may point to the earliest MG occasion for the UE, which is configured any time after the reception of the DCI message. The first MG skipping rule may further consider a minimum processing time gap, which may be set under consideration of the processing time the UE requires for processing the indication included in the DCI.

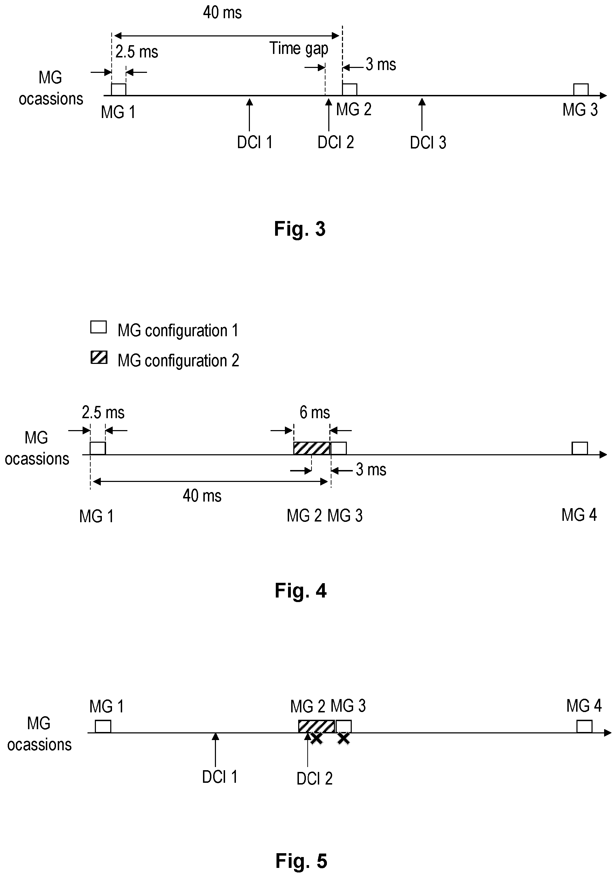

**Fig. 3** schematically illustrates an application scenario, where the first MG skipping rule is applied. In the illustrated example, the MG occasions are configured with a measurement gap length of 2.5 ms and a measurement gap periodicity of 40 ms. Here, the three measurement gap occasions MG 1, MG 2 and MG 3 are shown. Further, it is assumed that the processing time gap, which allows the UE to process the measurement gap skipping indication before its application, is set to 3 ms. To determine, which of the measurement gap occasions is to be skipped, the UE (and the gNB) apply the above described first MG skipping rule, i.e. the UE (and the gNB) determine that the indication in a DCI points to the earliest MG occasion for the UE, which is configured any time after the reception of the DCI message, under consideration of the processing time gap. That means that a MG skipping indication included in DCI 1, which is received and processed before the start of MG 2 instructs the UE to skip MG 2 as the subsequent MG occasion. At the same time, a MG skipping indication included in DCI 2, which is received before the start of MG 2, but successfully processed only after the start of MG 2, instructs the UE to skip MG 3 as the subsequent MG occasion. A MG skipping indication included in DCI 3, which is received and processed before the start of MG 3 instructs the UE to skip MG 3 as the subsequent MG occasion.

However, the inventors have identified problems, which may occur when applying the above described first MG skipping rule in determining the skipping of configured measurement gaps. For example, in a case where a DCI carries an indication instructing the UE to skip a measurement gap, while the UE has not configured measurement gaps, or in a case where a DCI carries an indication instructing the UE to skip a measurement gap and the next configured measurement gap starts a long time, e.g. 150 ms, after the indication is received, the UE might need to store the received MG skipping indication and apply it after a long time. At the later time, when the MG skipping indication is applied, skipping the MG occasion may however not be required. Accordingly, the application of the first MG skipping rule may complicate the processing in the UE and the base station.

Another problem with the first MG skipping rule may occur in a case, where the UE has been configured with two MG occasions after each other with only a short delay time in between. Such an application scenario is schematically illustrated in **Figs. 4 and 5****,** where MG occasions are configured according to a first MG configuration (MG configuration 1) with a measurement gap length of 2.5 ms and a measurement gap periodicity of 40 ms and according to a second MG configuration (MG configuration 2) with a measurement gap length of 6 ms and a larger measurement gap periodicity. Here, the three measurement gap occasions MG 1, MG 3 and MG 4, which are configured according to MG configuration 1 and the measurement gap occasions MG 2, which is configured according to MG configuration 2 are shown. The measurement gap occasion MG 2 belonging to MG configuration 2 is followed immediately by the measurement gap occasion MG 3 belonging to MG configuration 1. Consequently, in case the gNB intends the UE to skip measurement gap occasion MG3, when applying the first MG skipping rule, the gNB may be required to send a first DCI carrying an indication to skip MG occasion MG 2 (see e.g. DCI 1 in Fig. 5), and then send another DCI carrying an indication to skip MG occasion MG 3 (see e.g. DCI 2 in Fig. 5). This may enhance the control signaling overload between the gNB and the UE. Furthermore, depending on the MG configurations applied, it may not be feasible to only skip a measurement gap occasion, which immediately follows another MG occasion with only a small delay time in between (like MG 3 in the example of Figs. 4 and 5).

Furthermore, the inventors have found that in a case where two or more measurement gaps (e.g. being configured according to different MG configurations) overlap or collide in time, it is not clear to which of the overlapping (colliding) measurement gaps the MG skipping indication should be applied, when using the first MG skipping rule. Accordingly, when using the first MG skipping rule, a gNB and a UE may determine different measurement gaps as measurement gaps to be skipped.

The inventors have therefore identified the possibility of providing an improved measurement gap skipping procedure and parts thereof, which facilitate meeting the above needs and avoiding one or more of the disadvantages described above. The present invention relates to various solutions and variants for such improved measurement gap skipping procedure, and especially an improved procedure for determining the measurement gaps, to which a MG skipping indication is applied.

### Embodiments

In the following, communication devices which may be UEs, base stations, and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes. The mobile station or mobile node or user terminal or user equipment (UE) is a first example of a communication apparatus.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system. The base station or radio base station is a second example of a communication apparatus.

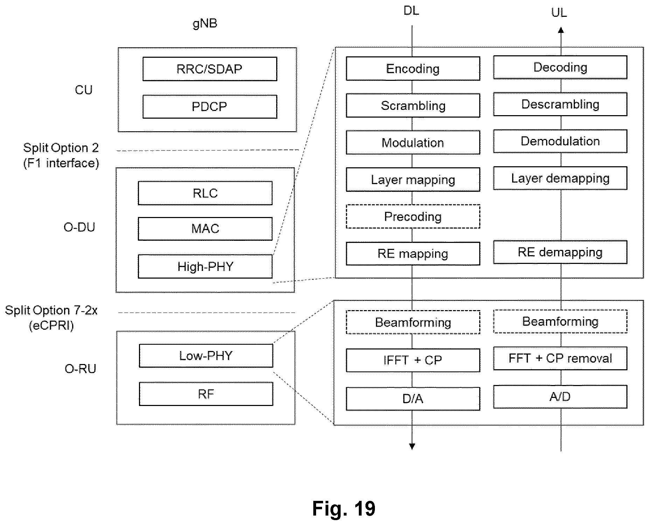

Communication between the UE and the base station is typically standardized and may be defined by different layers, such as PHY, MAC, RRC etc. (see, for instance, description of **Fig. 19** below).

As used herein, the term **"measurement gap"** or **"MG"** refers to a time domain opportunity provided for the UE to perform measurements on, for example, reference signals. The network may configure a UE with a plurality of MGs, e.g. via RRC signaling, thereby configuring a MG pattern. The network may configure these MGs so that they do not coincide with UE transmissions or receptions. A UE may be configured with multiple MGs.

The term **"measurement gap skipping indication"** refers to MG skipping information, which is transmitted from a base station to a UE, for allowing the UE to determine at least one configured measurement gap, which can be skipped by the UE according to the transmitted information, so that the UE can transmit and/or receive data instead of performing the skipped measurement gap(s). The MG skipping information may be transmitted by the gNB (received by the UE) for example, in a downlink control information (DCI) message. In particular, the MG skipping information may be conveyed by a single bit of a scheduling DCI message. Other possible terms could be used for the terms "indication" and "indicate", such as **"instruction"** and **"instruct".**

The term **"skipping"** can be understood, for example, as the act of not taking advantage of an opportunity. In other words, if the UE skips a measurement gap (or an opportunity to perform a measurement gap), the UE does not use a measurement gap (or measurement gap occasion) determined from the configured MG pattern to perform measurements in a target carrier, but the UE may instead transmit or receive data in the serving cell. Other possible terms could be used for the term "skipping", such as **"dropping", "omitting",** or **"leaving out".**

The term **"reception timing of an indication"** should refer at the UE side to a time resource unit, which is allocated for a (downlink) control channel (like PDCCH), through which the indication is received by the UE. Similar, the term **"transmission timing of an indication"** should refer at the base station side to a time resource unit, which is allocated for a (downlink) control channel (like PDCCH), through which the indication is transmitted by the base station. In other words, based on the timing of the time resource unit, which is used by the base station for transmitting the indication to the UE, the UE determines the "reception timing of the indication" and the base station determines the "transmission timing of the indication". Accordingly, if in the following it is described that the UE determines a timing of an event, e.g. a measurement gap skipping time period or an occasion of MG skipping, based on the "reception timing" of an indication, this should include that the base station determines the timing of the same event based on the "transmission timing" of the indication.

The term **"overlap"** as used here can be understood as an overlap in time or as a collision in time. Two scheduled events, e.g. the MG and the MG skipping time period or at least two measurement gaps or at least two MG skipping time periods, overlap in time if two or more activities are scheduled to take place simultaneously or in partially overlapping time periods. Especially, two scheduled events overlap in time if two or more activities are scheduled to take place in a same time resource unit or in partially overlapping time periods. Other possible terms could be used for the term "overlap", such as **"collide", "coincide",** or **"intersect".**

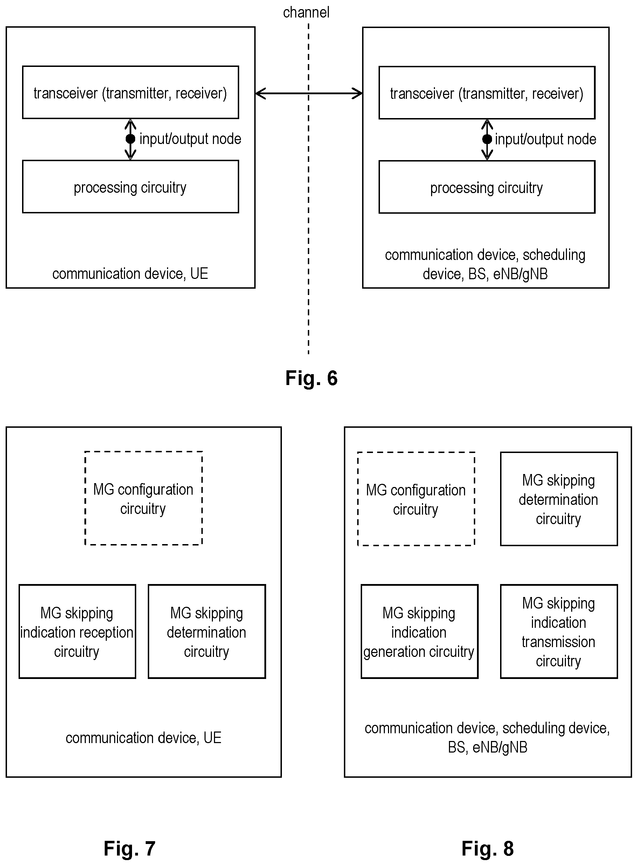

**Fig. 6** illustrates a general, simplified and exemplary block diagram of a UE (also termed communication device/apparatus) and a scheduling device (also termed communication device/apparatus, here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication devices may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of improved measurement gap skipping procedures will be described in the following, which facilitate for a UE to perform improved measurement gap skipping. In said connection, improved UEs, improved base stations and improved integrated circuits are presented, which participate separately or together in the improved transmission procedures. Corresponding methods for the UE behavior and the base station behavior are provided as well. The integrated circuits may correspond to the UE and base station, and respectively their behavior.

The present solutions of the improved measurement gap skipping procedure can be based on some or a combination of the different mechanisms described above in context of the exemplary 3GPP 5G-NR implementations, including e.g. the use of the signaling mechanisms (e.g. for configuring measurement gaps) or details on the implementation scenarios (see XR) as currently discussed in 3GPP.

**Fig. 7** illustrates a simplified and exemplary UE structure according to an exemplary implementation of the improved measurement gap skipping procedure, which can be implemented based on the general UE structure explained in connection with Fig. 6. The various structural elements of the UE illustrated in said Fig. 7 can be interconnected between one another e.g., with corresponding input/output nodes (not shown) e.g., in order to exchange control and user data and other signals. Although not shown for illustration purposes, the UE may include further structural elements.

As apparent from Fig. 7, the UE may include MG skipping indication reception circuitry and MG skipping determination circuitry. Optionally, the communication apparatus may include MG configuration circuitry.

In the present case as will become apparent from the below disclosure, the processing circuitry of the UE can thus be exemplarily configured to at least partly perform one or more of determining, by using a reception timing of a measurement gap skipping indication, to skip at least one measurement gap among a plurality of configured measurement gaps, etc.

In the present case, as will become apparent from the below disclosure, the transceiver of the UE can thus be exemplarily configured to at least partly perform one or more of receiving one or more signals conveying a measurement gap skipping indication, etc.

One exemplary procedure as will be disclosed in more detail further below is implemented by a communication apparatus (such as a UE) that includes the following. A transceiver of the communication apparatus, in operation, (is configured to) receives one or more signals conveying a measurement gap skipping indication, which indicates to skip at least one measurement gap, MG. A processing circuitry of the communication apparatus, in operation, (is configured to) determines, by using a reception timing of the measurement gap skipping indication, to skip at least one measurement gap among a plurality of configured measurement gaps, which are configured in a time period following the reception timing of the measurement gap skipping indication.

The processing circuitry of the communication apparatus may implement more functionality than the above-mentioned determination of measurement gap(s) as measurement gap(s) to be skipped, as it may, for instance, further configure one or more patterns of measurement gaps by using measurement gap configuration information received, e.g. by higher layer signaling or more particular RRC signaling, from a base station and may control the transceiver to transmit or receive control signaling and/or to receive or transmit data.

A corresponding exemplary method comprises the following steps performed by a communication apparatus (e.g. a UE):
receiving one or more signals conveying a measurement gap skipping indication, which indicates to skip at least one measurement gap, MG; and
determining, by using a reception timing of the measurement gap skipping indication, to skip at least one measurement gap among a plurality of configured measurement gaps, which are configured in a time period following the reception timing of the measurement gap skipping indication.

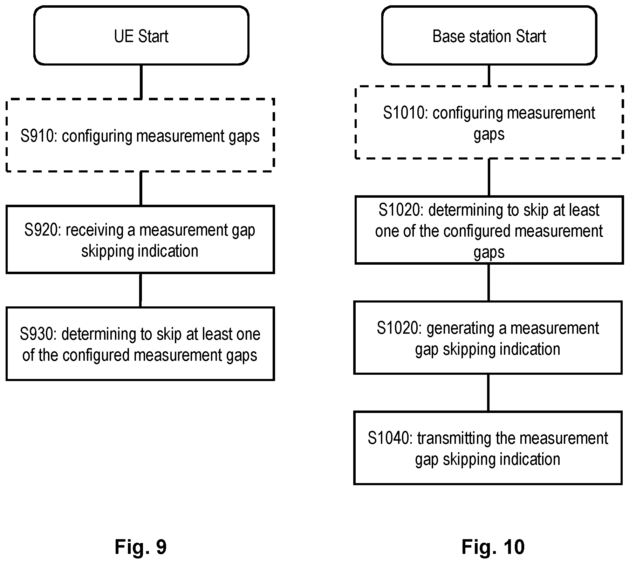

A corresponding sequence diagram for an exemplary UE behavior in line with the above-discussed UE and UE method is illustrated in **Fig. 9****.** As illustrated, the method may further comprise an optional step (S910) of configuring a plurality of measurement gaps (or pattern of measurement gaps) by using configuration information, which may include, for example information on the measurement gap configuration parameters described in the section *"Measurement gap (MG)"* above.

The above-described measurement gap skipping procedure thus achieves the object and overcomes some of the drawbacks explained above. For instance, the improved measurement skipping procedures facilitates for a UE and a base station to determine, which measurement gaps are to be skipped based on a reception/transmission timing of a (dynamic) indication. In this respect, the improved measurement skipping procedures facilitates the indication process for the base station and the determination process for the UE. Furthermore, the improved measurement skipping procedures facilitates limiting the time a UE has to store a MG skipping indication after its reception and enhancing the flexibility for the base station to indicate the UE to skip individual measurement gaps.

Some exemplary implementations of the improved measurement gap skipping procedures also involve improved base stations. Correspondingly, the improved measurement gap skipping procedure also provides improved base stations that participate therein, as will be explained in the following.

**Fig. 8** illustrates a simplified and exemplary base station structure according to an exemplary implementation of the improved measurement gap skipping procedure, which can be implemented based on the general base station structure explained in connection with Fig. 6. The various structural elements of the base station illustrated in said Fig. 8 can be interconnected between one another e.g., with corresponding input/output nodes (not shown) e.g., in order to exchange control and user data and other signals. Although not shown for illustration purposes, the base station may include further structural elements.

As apparent from Fig. 8, the base station may include a MG skipping determination circuitry, an MG skipping indication generation circuit, and a MG skipping indication transmission circuitry. Optionally, the communication apparatus may include MG configuration circuitry.

In the present case as will become apparent from the below disclosure, the processing circuitry of the base station can thus be exemplarily configured to at least partly perform one or more of generating a measurement gap skipping indication, configuring a plurality of measurement gaps, determining, by using a transmission timing of the measurement gap skipping indication, to skip at least one measurement gap, etc.

In the present case as will become apparent from the below disclosure, the transceiver of the base station can thus be exemplarily configured to at least partly perform one or more of transmitting the measurement gap skipping indication, etc.

The processing circuitry of the base station may implement more functionality than the above-mentioned adapting the configured measurement gap skipping time period, as it may, for instance, further configure one or more patterns of measurement gaps, generate measurement gap configuration information for the one or more pattern of measurement gaps, may control the transceiver to transmit or receive control signaling (e.g. to transmit the measurement gap configuration information in higher layer, e.g. RRC, signaling) and/or to receive or transmit data.

One exemplary procedure as will be disclosed in more detail further below is implemented by a communication apparatus (such as a base station) that includes the following. A processing circuitry of the communication apparatus, in operation, (is configured to) generates a measurement gap skipping indication, which indicates to skip at least one measurement gap, MG. A transceiver of the communication apparatus, in operation, (is configured to) the measurement gap skipping indication to a terminal.The processing circuitry, in operation, (is configured to) determines, by using a transmission timing of the measurement gap skipping indication, to skip at least one measurement gap among a plurality of configured measurement gaps, which are configured in a time period following the transmission timing of the measurement gap skipping indication.

A corresponding method comprises the following steps performed by the communication apparatus (such as a base station):
generating a measurement gap skipping indication, which indicates to skip at least one measurement gap, MG;
transmitting one or more signals conveying the measurement gap skipping indication to a terminal; and
determining, by using a transmission timing of the measurement gap skipping indication, to skip at least one measurement gap among a plurality of configured measurement gaps, which are configured in a time period following the transmission timing of the measurement gap skipping indication.

A corresponding sequence diagram for an exemplary base station behavior in line with the above-discussed communication apparatus and corresponding method is illustrated in **Fig. 10****.** The sequence diagram illustrates an exemplary and simplified implementation of the above presented base station method. As illustrated, the method may further comprise an optional step (S1010) of configuring a plurality of measurement gaps (or pattern of measurement gaps) and generating configuration information, which may include, for example, for each pattern of measurement gaps information on the measurement gap configuration parameters described in the section *"Measurement gap (MG)"* above.

Furthermore, in an exemplary implementation scenario, the circuitry of the communication apparatus (e.g. of a base station), in operation, determines a measurement gap among a plurality of configured measurement gaps as a measurement gap to be skipped, and determines the transmission timing of the measurement gap skipping indication, which is used to indicate to a communication apparatus, the measurement gap to be skipped.

Different and exemplary implementations of the improved measurement gap skipping procedure are explained in the following. For the explanation of the different implementation, some exemplary and simplifying assumptions are made. Here it should be noted that the improved measurement gap skipping procedures are applied by the UE and by the base station, so that both entities can determine occasions where the UE may skip one or more measurement gap(s).

As an overview, a First solution introduces MG skipping time periods, as time windows (TW) which may be used by the UE and the base station for determining, to which one or more among a plurality of configured measurement gaps a measurement gap skipping indication should be applied. A Second solution, introduces ordered procedures for a base station and a UE, when a measurement skipping procedure (in particular according to the first Solution or a variant thereof) and a collision handling procedure are applied to the same overlapping measurement gaps. A Third solution introduces scenarios for applying a measurement gap skipping indication in a measurement skipping procedure (in particular according to the first Solution or a variant thereof) only to measurement gaps with a certain characteristic (e.g. a certain configuration or priority).

It should be noted that each of the First to Third solutions provide independent solutions, which individually or in combination provide improved measurement gap skipping procedures. In other words, the improved measurement gap skipping procedures may be achieved, when implementing at least one of the first to third solutions or when implementing any possible combination of the first to third solutions, as will become apparent in the following.

The solutions and their variants and implementations are primarily and exemplarily described on the basis of such a video stream scenario, according to which video frames are communicated between the UE and the base station. In one example, the video application is an application for eXtended Reality (XR), as presented above for 5G NR.

However, this is only an example of a scenario to which the solutions can be applied. The solutions can also be applied to other scenarios than video frames, e.g. in scenarios in which data is exchanged with a varying periodicity, e.g. over a generating window (such as the jitter window for video frames) or with a varying size of the data to be transmitted. Other scenarios are for example the exchange of quasi-periodic data, including data from a monitoring or sensing application, such as smart-metering, environmental monitoring or agricultural monitoring.

### First solution - Measurement gap skipping time period

In the first solution, the circuitry of the communication apparatus (e.g. of a UE), in operation, determines to skip the at least one measurement gap by using a MG skipping time period, which is valid for a skipping duration.

The term **"measurement gap skipping time period"** or **"MG skipping time period"** as used herein may relate to a time window, which allows a UE to determine occasions for skipping one or more measurement gap(s), for example, among a plurality of measurement gaps included in a configured MG pattern. As will be described in detail in the following, the measurement gap skipping time period may be configured by semi-static signaling or dynamic signaling and may be a singular measurement gap skipping time period or included in a pattern of a plurality of measurement gap skipping time periods being configured with the same parameters. The measurement gap skipping time period may be defined by at least one parameter associated with any of the following: a starting point of the measurement gap skipping time period, an ending point of the measurement gap skipping time period, a skipping duration of the measurement gap skipping time period (i.e. a time difference between the starting point and the ending point of the measurement gap skipping time period).

In an exemplary implementation of the first solution, the skipping duration of the MG skipping time period may correspond to a duration of at least one time resource unit, wherein the time resource unit is one or a combination of radio frames, sub-frames, slots or symbols. For example, the MG skipping period may be configured (or "last" or "be valid") for a certain number of frames, which means that the skipping duration corresponds to the duration of the certain number of frames. Alternatively, the MG skipping period may be configured a certain number of sub-frames, a certain number of slots or a certain number of symbols, which means that the skipping duration corresponds to the duration of sub-frames, the certain number of slots or the certain number of symbols.

In the following, different variants of the first solution are presented, which benefit from the introduction of the MG skipping time period as a period for determining the measurement gaps to be skipped. Hereby, in the first variant, the UE (and the base station) configure a pattern of a plurality of measurement gap skipping time periods, and the configured measurement gaps are respectively associated with at least one among the plurality of measurement gap skipping time periods to facilitate the determination of the measurement gaps to be skipped by the UE. In the second variant, the timing of a MG skipping time period is determined based on the reception timing of the respective measurement gap skipping indication and the MG skipping time period is associated with the respective measurement gap skipping indication to facilitate the determination of the measurement gaps to be skipped by the UE. In the third variant, the timing of a MG skipping time period is determined based on the timing of the respective measurement gap and the MG skipping time period is associated with the respective measurement gap to facilitate the determination of the measurement gaps to be skipped by the UE.

### First variant of the First solution

According to the first variant of the first solution, the circuitry of the communication apparatus (e.g. of a UE), in operation, configures a pattern of a plurality of MG skipping time periods and in operation, in response to receiving the measurement gap skipping indication within one of the plurality of MG skipping time periods, determines to skip at least one of the measurement gaps being associated with the one of the plurality of MG skipping time periods, which is valid during the reception timing of the measurement gap skipping indication.

In other words, in the first variant of the first solution, the UE and the base station may configure a (periodic) pattern including a plurality of MG skipping time periods. For configuring the pattern of the plurality of measurement gap skipping time periods, the UE may receive MG skipping time period configuration information from the base station, for example by higher layer signaling (e.g. RRC signaling). The MG skipping time period configuration information may indicate a starting point of the pattern, for example an offset time between the reception time of the MG skipping time period configuration information, a skipping duration of the plurality measurement gap skipping time periods included in the pattern and a time difference between starting points of two consecutive measurement gap skipping time periods. The duration of the plurality measurement gap skipping time periods, e.g. in units of time resource unit or ms, and optionally a time difference between starting points of two consecutive measurement gap skipping time periods, which may be applicable for all of the plurality of measurement gap skipping time periods included in the pattern. The offset time between the reception time of the configuration information and the starting point of the measurement gap skipping time period could be included as an explicit parameter in the configuration information or could be a pre-defined value. In an alternative implementation example, the configuration information may include a bitmap to indicate the above-mentioned parameter of the plurality of measurement gap skipping time periods included in the pattern.

Furthermore, the MG skipping time period configuration information may include association information, which allows the base station and the UE to configure an association between the plurality measurement gap skipping time periods included in the pattern and the measurement gaps to be skipped. Alternatively, this association may be determined according to a pre-defined association rule, which is known to both the base station and the UE, or may be indicated by dynamic signaling (e.g. in a DCI message) or in a MAC CE (control element) message.

The base station, which has a same understanding of the configured MG skipping time periods as the UE, when intending to indicate the UE to skip a measurement gap among a plurality of configured measurement gaps, determines the transmission timing of the measurement gap skipping indication, , i.e. to determine the time resource unit for transmitting the measurement gap skipping indication. The transmission timing of the measurement gap skipping indication at the base station is interrelated to the reception timing of the measurement gap skipping indication at the UE side, which is used by the UE to determine the measurement gap(s) to be skipped based on the configured pattern of MG skipping time periods.

As an exemplary association rule of the first variant of the first solution, a measurement gap may be associated with a measurement gap skipping time period among the plurality measurement gap skipping time periods, which overlaps with the measurement gap or at least with a starting point of the measurement gap in time. Hereby, the processing time gap for processing the measurement gap skipping indication may be considered and depending on the position of the measurement gap within the respective measurement gap skipping time period, the measurement gap may be associated with the foregoing measurement gap skipping time period, especially when a time difference between the starting point of the measurement gap and the starting point of the measurement gap skipping time period is smaller than the processing time gap. According to an alternative exemplary association rule of the first variant of the first solution, a measurement gap may be associated with a measurement gap skipping time period among the plurality measurement gap skipping time periods, which antecedes the measurement gap skipping time period, with which the measurement gap overlaps. Here again, the processing time for processing the measurement gap skipping indication may be considered in determining the association.

Furthermore, each measurement gap could be associated with exactly one measurement gap skipping time period (as described in the association rules before), or could be associated with more than one measurement gap skipping time period, for example the measurement gap skipping time period, with which the measurement gap overlaps, and one or more of the directly foregoing measurement gap skipping time periods.

When receiving a measurement skipping indication in one of the plurality of MG skipping time periods as an indicated MG skipping time period, by applying one of the exemplary association rules, the UE may determine as alternatives i) to skip the first configured measurement gap being associated with the indicated MG skipping time period, ii) to skip the last configured measurement gap being associated with the indicated MG skipping time period, iii) to skip a predetermined number of the configured measurement gaps being associated with the indicated MG skipping time period or iv) to skip all of the configured measurement gaps being associated with the indicated MG skipping time period. Which of the alternatives is applied may be configured to the UE (by the base station) by higher layer signaling (e.g. RRC signaling), may be transmitted in a MAC CE, or by in a DCI message, or may be preconfigured in a firmware of the UE (and in a firmware of the base station).

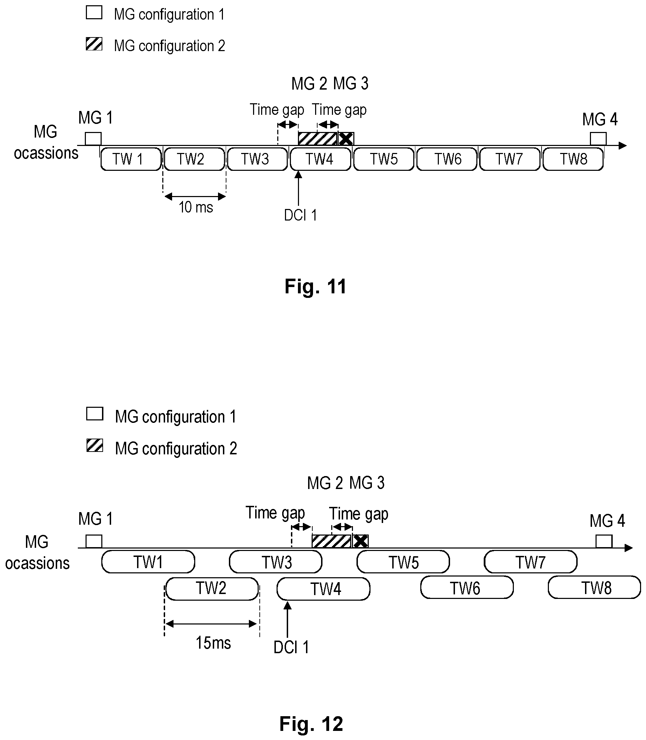

A first exemplary implementation of an improved measurement gap skipping procedure according to the first variant of the first solution is illustrated in Fig. 11. In this exemplary implementation, the pattern of the plurality of MG skipping time periods includes a plurality of non-overlapping MG skipping time periods and each of the plurality of configured measurement gaps is associated with one or more of the plurality of MG skipping time periods. In the illustrated exemplary implementation, the non-overlapping MG skipping time periods consecutively follow one another, without discontinuity within the pattern. In other words, for all MG skipping time periods (except for the first) of the pattern, the starting point of the MG skipping time period coincides with the ending point of a preceding (foregoing) MG skipping time period.

In the example of Fig. 11, the skipping duration of the plurality of MG skipping time periods (i.e. TW1 to TW8) is configured according to time scheduling units (time resource units), such as a number of frames, sub-frames, slots, and/or symbols. In this manner, the boundaries (i.e. the starting points and the ending points) of the plurality of MG skipping time periods are aligned with the boundaries of time resource units, and each of the plurality of MG skipping time periods is valid for a configured number of time resource units. Here, for example the skipping duration of the plurality of MG skipping time periods included in the pattern is configured to be 10 ms.

In the example of Fig. 11, the UE has configured MG occasions according to a first MG configuration (MG configuration 1) with a measurement gap length of 2.5 ms and a measurement gap periodicity of 40 ms and according to a second MG configuration (MG configuration 2) with a measurement gap length of 6 ms and a larger measurement gap periodicity (similar as in the example of Figs. 4 and 5). Here, the three measurement gap occasions MG 1, MG 3 and MG4, which are configured according to MG configuration 1 and the measurement gap occasions MG 2, which is configured according to MG configuration 2 are shown. The measurement gap occasion MG 2 belonging to MG configuration 2 is followed immediately by the measurement gap occasion MG 3 belonging to MG configuration 1.

In this example, for associating the measurement gaps with the MG skipping time periods, a time gap is considered by the UE and the base station to take into account the processing time the UE requires to process the measurement gap skipping indication. Here, a MG skipping time period is, for example, associated with the measurement gap skipping time window, in which the (processing) time gap, which is added before the measurement gap, starts, so that for example measurement gap MG 2 is associated with MG skipping time period TW3, where the minimum processing time gap required before MG 2 starts, and measurement gap MG 3 is associated with MG skipping time period TW4, where the minimum processing time gap required before MG 3 starts. Accordingly, a measurement gap skipping indication, which is received by the UE at a reception timing, which coincides with MG skipping time period TW3, and before the processing time gap of MG 2 begins, points to skipping the measurement gap MG 2, and a measurement gap skipping indication, which is received by the UE at a reception timing, which coincides with MG skipping time period TW4, and before the processing time gap of MG 3 begins, points to skipping the measurement gap MG 3. In the illustrated example, the UE receives a measurement gap skipping indication in a DCI message DCI 1 at a reception timing that coincides with MG skipping time period TW4, so that the UE determines by using the reception timing of the DCI message DCI 1 to skip the measurement gap MG 3 (as illustrated by the "X" in Fig. 11).

Consequently, the introduction of a pattern of a plurality of non-overlapping MG skipping time periods in the first variant of the First Solution facilitates for the base station to indicate to the UE individual measurement gaps, which are to be skipped. Furthermore, because the configured measurement gaps can be associated by the UE with the MG skipping time periods, the MG skipping time periods define a maximum time period following the reception timing of the measurement gap skipping indication, during which the UE is required to store and apply the received measurement gap skipping indication.

A second exemplary implementation of an improved measurement gap skipping procedure according to the first variant of the first solution is illustrated in **Fig. 12****.** In the second exemplary implementation, the pattern of the plurality of MG skipping time periods includes a plurality of overlapping MG skipping time periods, and the circuitry of the communication apparatus (e.g. of a UE), in operation, in response to receiving the measurement gap skipping indication within a plurality of overlapping MG skipping time periods, selects to skip at least one of the one or more measurement gaps being associated with the overlapping MG skipping time periods according to a first order rule, which defines to consider the chronological order of the plurality of overlapping MG skipping time periods. In the illustrated example, each pair of consecutive MG skipping time periods is configured to partially overlap.

In the example of Fig. 12, again the skipping duration of the plurality of MG skipping time periods (i.e. TW1 to TW8) is configured according to time scheduling units (time resource units), such as a number of frames, sub-frames, slots, and/or symbols. Here, for example the skipping duration of the plurality of MG skipping time periods is set to 15 ms, wherein the plurality of MG skipping time periods overlap in time with the foregoing and the following MG skipping time periods (e.g. by an time overlap of 5 ms). Further, in Fig. 12, the measurement gaps are exemplary configured according to the MG configurations described for Fig. 11, i.e. the three measurement gap occasions MG 1, MG 3 and MG 4 are configured according to MG configuration 1 described above and the measurement gap occasions MG 2, which is configured according to MG configuration 2 described above. The measurement gap occasion MG 2 belonging to MG configuration 2 is followed immediately by the measurement gap occasion MG 3 belonging to MG configuration 1.

The UE and the base station may use the above described association rules for associating the measurement gaps with the one or more of the plurality of MG skipping time periods of the pattern. In Fig. 12, for example, a measurement gap is, under consideration of the processing time gap, associated with the MG skipping time periods, which coincides with the starting point of the measurement gap (i.e. which is valid during the start of the measurement gap). If the starting point of the measurement gap, or more precisely the starting point of the processing time gap added before the measurement gap, coincides with two (or more) overlapping MG skipping time periods, the measurement gap is associated with the one of the overlapping MG skipping time periods that starts earlier. Furthermore, in an optional implementation, if more than one MG occasion starts within the same of MG skipping time period, the MG occasion that starts later is associated with the MG skipping time period. Accordingly, in Fig. 12 measurement gap MG 2 is associated with MG skipping time period TW3 (where the minimum processing time gap required before MG 2 starts) and measurement gap MG 3 is associated with MG skipping time period TW4 (where the minimum processing time gap required before MG 3 starts). Accordingly, a measurement gap skipping indication, which is received by the UE in MG skipping time period TW3 before the time gap of MG 2 begins, points to skipping the measurement gap MG 2, and a measurement gap skipping indication, which is received by the UE in MG skipping time period TW4 before the time gap of MG 3 begins, points to skipping the measurement gap MG 3.

If the UE receives the measurement gap skipping indication at a reception timing, which coincides with two or more overlapping MG skipping time periods, the UE uses the first order rule, which considers the chronological order of the plurality of overlapping MG skipping time periods to determine, which of the measurement gaps associated with the overlapping MG skipping time periods are to be skipped. The first order rule may be configured to the UE (by the base station) by higher layer signaling (e.g. RRC signaling), may be transmitted in a MAC CE, or by in a DCI message, or may be preconfigured in a firmware of the UE (and in a firmware of the base station). The first order rule, for example, may define that the measurement gap skipping indication may be applied to the measurement gaps associated with the (one or more) latest starting of the overlapping MG skipping time periods, i.e. with the one or more of the overlapping MG skipping time periods, which has the latest starting point among the overlapping MG skipping time periods.

Alternatively, the first order rule, for example, may define that the measurement gap skipping indication may be applied to the measurement gaps associated with the (one or more) earliest starting of the overlapping MG skipping time periods, i.e. with the one or more of the overlapping MG skipping time periods, which has the earliest starting point among the overlapping MG skipping time periods.

In the illustrated example of Fig. 12, the UE receives a measurement gap skipping indication in a DCI message DCI 1 at a reception timing, which coincides with two overlapping MG skipping time periods TW3 and TW4, i.e. while both of MG skipping time periods TW3 and TW4 are valid, and before the starting point of the processing time gaps used for measurement gaps MG 2 and MG 3. Here, as an example, the first order rule may define to apply the measurement gap skipping indication to the later one of the overlapping MG skipping time periods TW3 and TW4. Accordingly, here the UE selects the measurement gaps associated with MG skipping time period TW4. Both of the processing time gaps of measurement gaps MG 2 and MG 3 start in MG skipping time period TW4, but because the processing time gaps of measurement gap of MG 2 starts also in the earlier MG skipping time period TW3, MG 2 is associated with MG skipping time period TW3 and only MG 3 is associated with MG skipping time period TW4. Accordingly, by using the reception timing of the DCI message DCI 1, which includes the measurement gap skipping indication, the UE determines to skip the measurement gap MG 3 (as illustrated by the "X" in Fig. 12).

Consequently, the introduction of a pattern of a plurality of overlapping MG skipping time periods in the first variant of the First Solution facilitates for the base station to indicate to the UE individual measurement gaps, which are to be skipped. Furthermore, because the configured measurement gaps can be associated by the UE with the MG skipping time periods, the MG skipping time periods define a maximum time period following the reception timing of the measurement gap skipping indication is required to store and apply the received measurement gap skipping indication.

### Second variant of the First solution

According to the second variant of the First solution, the MG skipping time period is associated with the received measurement gap skipping indication, and the circuitry of the communication apparatus (e.g. of a UE), in operation, determines a starting point of the MG skipping time period based on the reception timing of the received measurement gap skipping indication. For example, the circuitry may determine the starting point of the MG skipping time period by adding an offset time to the reception timing of the received measurement gap skipping indication.

In other words, in the second variant of the first solution the UE determines for each of the received measurement gap skipping indications an individual MG skipping time period based on the reception timing of the respective measurement gap skipping indication, which is associated with the respective measurement gap skipping indication. The starting point of the MG skipping time period may be shifted with respect to the reception time of the measurement gap skipping indication by the offset time to take into account the processing time gap of the measurement gap skipping indication, so that the MG skipping time period starts at the earliest when the processing time gap for processing the measurement gap skipping indication is over. The offset time may be configured to the UE by higher layer signaling (e.g. in a RRC message), or may be dynamically indicated to the UE e.g. in a same or different DCI message, which includes the measurement gap skipping indication.

In an exemplary implementation of the second variant of the First solution, the circuitry of the communication apparatus (e.g. of a UE), in operation, in response to receiving the measurement gap skipping indication, determines to skip at least one of the configured measurement gaps, which at least partly overlap with the MG skipping time period being associated with the received measurement gap skipping indication.

In other words, when receiving a measurement skipping indication, the UE may determine as alternatives i) to skip the first configured measurement gap, which fully or partially overlaps the determined MG skipping time period, ii) to skip the last configured measurement gap, which fully or partially overlaps the determined MG skipping time period, iii) to skip a predetermined number of the configured measurement gaps, which fully or partially overlaps the determined MG skipping time period, or iv) to skip all of the configured measurement gaps, which fully or partially overlaps the determined MG skipping time period. Which of the alternatives is applied may be configured to the UE (by the base station) by higher layer signaling (e.g. RRC signaling), may be transmitted in a MAC CE, or by in a DCI message, or may be preconfigured in a firmware of the UE (and in a firmware of the base station).

Hereby, in a first alternative implementation, the UE may determine to skip a complete measurement gap, which at least partially overlaps in time or which completely overlaps in time with the determined MG skipping time period. Consequently, in the first alternative implementation the UE does not use the MG to perform (RRM) measurements in a target carrier, but the UE may instead transmit UL transmissions and/or receive DL transmissions in the serving cell. In a second alternative implementation, the UE may skip only a part of a measurement gap, which overlaps in time with the determined MG skipping time period. Consequently, in the second alternative implementation, the UE uses a part of the MG, which does not overlap with determined MG skipping time period, to perform (RRM) measurements in a target carrier, and does not use a part of the MG, which overlaps with the determined MG skipping time period, to perform (RRM) measurements in a target carrier, but the UE may instead transmit UL transmissions and/or receive DL transmissions in the serving cell in the non-overlapping part of the MG. In other words, in the second alternative implementation, the UE determines to shorten, but not to completely skip, a MG, which partially overlaps with the determined MG skipping time period in time.

The base station, which has a same understanding of the determined MG skipping time period as the UE, when intending to indicate the UE to skip a measurement gap among a plurality of configured measurement gaps, determines the transmission timing of the measurement gap skipping indication, i.e. determines the time resource unit for transmitting the measurement gap skipping indication. The transmission timing of the measurement gap skipping indication at the base station is interrelated to the reception timing of the measurement gap skipping indication at the UE side, which is used by the UE to determine the measurement gap(s) to be skipped based on the indicated MG skipping time period.

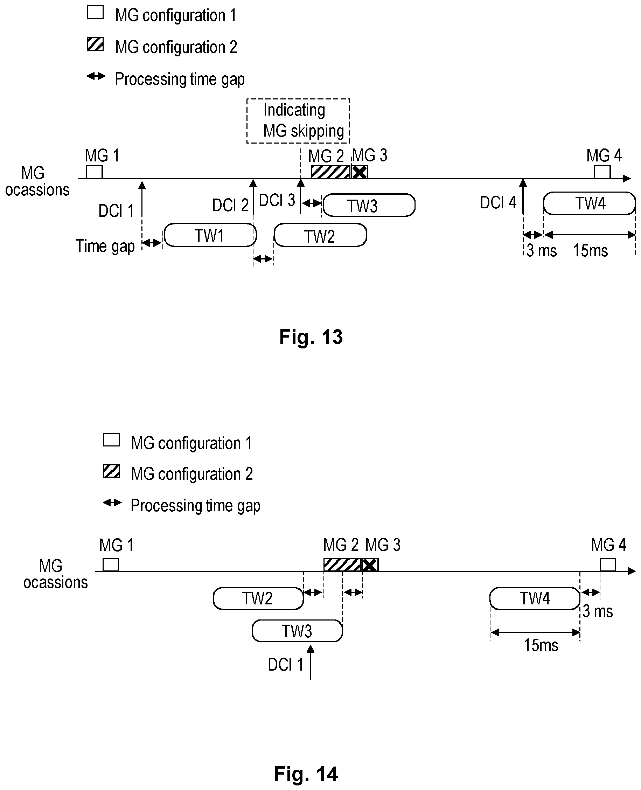

Fig. 13 illustrates an exemplary implementation of an improved measurement gap skipping procedure according to the second variant of the first solution. Here, the skipping duration of a MG skipping time period (e.g. TW1 to TW4) is configured according to time scheduling units (time resource units), such as a number of frames, sub-frames, slots, and/or symbols. For example, the skipping duration of the plurality of MG skipping time periods is set to 15 ms. The processing time gap, which corresponds to the offset time between the reception timing of the measurement gap skipping indication and the starting point of the MG skipping time period, is exemplary set to 3 ms, which allows the UE a maximum processing time of 3 ms for processing the measurement gap skipping indication. Depending on the UE capabilities and on latency requirements, this processing time gap may be adapted to application needs. In Fig. 13, the measurement gaps are exemplary configured according to the MG configurations described for Fig. 11, i.e. the three measurement gap occasions MG 1, MG 3 and MG 4 are configured according to MG configuration 1 described above and the measurement gap occasions MG 2, which is configured according to MG configuration 2 above. The measurement gap occasion MG 2 belonging to MG configuration 2 is followed immediately by the measurement gap occasion MG 3 belonging to MG configuration 1.

In the example of Fig. 13, the UE receives a first measurement gap skipping indication in a first DCI message DCI 1 and determines the starting point of a first MG skipping time period TW1 being associated with the first measurement gap skipping indication based on the reception timing of the first DCI message DCI 1 (e.g. based on the time resource, to which DCI 1 is allocated), and the processing time gap. The UE receives a second measurement gap skipping indication in a second DCI message DCI 2 and determines the starting point of a second MG skipping time period TW2 being associated with the second measurement gap skipping indication based on the reception timing of the second DCI message DCI 2 (e.g. based on the time resource, to which DCI 2 is allocated), and the processing time gap. Further, the UE receives a third and a fourth measurement gap skipping indication in third and fourth DCI messages DCI 3 and DCI 4 and determines the starting point of a third and a fourth MG skipping time period TW3 and TW4 being respectively associated with the third and the fourth measurement gap skipping indication in an analogous manner.

In the illustrated example, measurement gap occasion MG 3 overlaps with the second MG skipping time period TW3, so that in response to receiving a measurement gap skipping indication in DCI 3, the UE determines to skip the measurement gap occasion MG 3 (as illustrated by the "X" in Fig. 13). Furthermore, as the measurement gap occasion MG 2 overlaps with the second MG skipping time period TW2 and the measurement gap occasion MG 4 overlaps with the fourth MG skipping time period TW3, the UE determines, in response to receiving a measurement gap skipping indication in DCI 2 or in DCI 4, to respectively skip the measurement gap occasions MG 2 and MG 4 (not illustrated in Fig. 13).

Consequently, the introduction of a MG skipping time period, which is associated with a received measurement gap skipping indication, in the second variant of the First solution facilitates for the base station to indicate to the UE individual measurement gaps, which are to be skipped. Furthermore, the determined MG skipping time periods are only valid for a certain time period (i.e. until the skipping duration lapses). Accordingly, the MG skipping time periods define a maximum time period following the reception timing of the measurement gap skipping indication, during which the UE is required to store and apply the received measurement gap skipping indication and afterwards, the UE can release the measurement gap skipping indication.

### Third variant of the First solution

According to the third variant of the First solution, the MG skipping time period is associated with a configured measurement gap, and the circuitry of the communication apparatus (e.g. of a UE), in operation, determines a starting point of a MG skipping time period based on the MG starting point of the associated measurement gap. For example, the circuitry of the communication apparatus may determine the starting point of the MG skipping time period by subtracting an offset time from the MG starting point of the associated measurement gap. Alternatively, the circuitry of the communication apparatus may determine the starting point of the MG skipping time period by adding the offset time to the skipping duration of the MG skipping time period and may determine the starting point of the MG skipping time such that the ending point of the offset time coincides with the starting point of the measurement gap.

In other words, in the third variant of the first solution the UE determines for each of the configured measurement gaps an individual MG skipping time period and determines to skip the measurement gap, if a reception timing of an measurement gap skipping indication overlaps (or coincides) with the respective MG skipping time period. The ending point of the MG skipping time period may be shifted with respect to the starting point of the measurement gap by the offset time to take into account the processing time gap of the measurement gap skipping indication, so that the measurement gap starts at the earliest when the processing time gap for processing the measurement gap skipping indication is over after the end of the MG skipping time period. The offset time may be configured to the UE by higher layer signaling (e.g. in a RRC message), or may be dynamically indicated to the UE e.g. in a DCI message.

In an exemplary implementation of the third variant of the First solution, the circuitry, in operation, in response to receiving the measurement gap skipping indication within the MG skipping time period, determines to skip the associated measurement gap. For example, the UE determines that the measurement gap skipping indication is within the MG skipping time period of a respective measurement gap, when the reception timing of the measurement gap skipping indication, for example determined by the timing of the time resource unit, which is used by the base station for transmitting the indication to the UE, overlaps with the MG skipping time period. In other words, for example the UE determines that the measurement gap skipping indication is within the MG skipping time period of a respective measurement gap, when the measurement gap skipping indication is received while the MG skipping time period is valid.

For the case that in the third variant of the First solution, the UE receives the measurement gap skipping indication at a reception timing, which coincides with two or more overlapping MG skipping time periods, according to a first alternative implementation, the UE may determine to skip all of the measurement gap being associated with the overlapping MG skipping time periods. According to a second alternative implementation, the UE may use in such a case a second order rule, which considers the chronological order of the plurality of overlapping MG skipping time periods to determine, which of the measurement gaps associated with the overlapping MG skipping time periods are to be skipped. The second order rule may be configured to the UE by higher layer signaling (e.g. RRC signaling), may be transmitted in a MAC CE, or by in a DCI message, or may be preconfigured in a firmware of the UE (and in a firmware of the base station). The second order rule, for example, may define that the measurement gap skipping indication may be applied to the measurement gaps associated with the (one or more) latest starting of the overlapping MG skipping time periods, i.e. with the one or more of the overlapping MG skipping time periods, which has the latest starting point among the overlapping MG skipping time periods. Alternatively, the second order rule, for example, may define that the measurement gap skipping indication may be applied to the measurement gaps associated with the (one or more) earliest starting of the overlapping MG skipping time periods, i.e. with the one or more of the overlapping MG skipping time periods, which has the earliest starting point among the overlapping MG skipping time periods.

The base station, which has a same understanding of the determined MG skipping time period as the UE, when intending to indicate the UE to skip a measurement gap among a plurality of configured measurement gaps, determines the transmission timing of the measurement gap skipping indication, i.e. determines the time resource unit for transmitting the measurement gap skipping indication. The transmission timing of the measurement gap skipping indication at the base station is interrelated to the reception timing of the measurement gap skipping indication at the UE side, which is used by the UE to determine the measurement gap(s) to be skipped based on the indicated MG skipping time period.

**Fig. 14** illustrates an exemplary implementation of an improved measurement gap skipping procedure according to the third variant of the first solution. Here, the skipping duration of a MG skipping time period (e.g. TW2 to TW4) is configured according to time scheduling units (time resource units), such as a number of frames, sub-frames, slots, and/or symbols. For example, the skipping duration of the plurality of MG skipping time periods is set to 15 ms. The processing time gap, which corresponds to the offset time between the ending point of the MG skipping time period and the starting point of the MG skipping time period, is exemplary set to 3 ms, which allows the UE a maximum processing time of 3 ms for processing the measurement gap skipping indication. Depending on the UE capabilities and on latency requirements, this processing time gap may be adapted to application needs.

In Fig. 14, the measurement gaps are exemplary configured according to the MG configurations described for Fig. 11, i.e. the three measurement gap occasions MG 1, MG 3 and MG 4 are configured according to MG configuration 1 described above and the measurement gap occasions MG 2, which is configured according to MG configuration 2 above. The measurement gap occasion MG 2 belonging to MG configuration 2 is followed immediately by the measurement gap occasion MG 3 belonging to MG configuration 1. For each of the measurement gap occasions MG 1 to MG 4, the UE determines an associated MG skipping time period (see TW2 to TW4, while TW1 is not illustrated) with a duration of 15 ms, and with an ending point that is set 3 ms, i.e. the processing time gap, before the starting point of the respective measurement gap occasion. For example, the UE determines the starting point of the MG skipping time period TW2 to be 15 ms before the ending point of the MG skipping time period TW2, which in turn is set to be 3 ms before the starting point of the measurement gap occasion MG 2. The ending and starting points of the MG skipping time period TW3 and TW4 are determined in an analogues manner, respectively based on the starting points of the measurement gap occasions MG 3 and MG 4.

In the example of Fig. 14, the UE receives a measurement gap skipping indication in DCI message DCI 1, which has a reception timing that coincides with the MG skipping time period TW3 being associated with the third measurement gap occasion MG 3. Accordingly, the UE determines to skip the measurement gap occasion MG 3, which is associated with MG skipping time period TW3 (as illustrated by the "X" in Fig. 14).

Consequently, the introduction of a MG skipping time period, which is associated with a respective measurement gap, in the third variant of the First Solution facilitates for the base station to indicate to the UE individual measurement gaps, which are to be skipped and especially facilitates enhancing the flexibility for the base station to indicate the UE to skip individual measurement gap occasions. Furthermore, the determined MG skipping time periods are only valid for a certain time period (i.e. until the skipping duration lapses). Accordingly, the MG skipping time period defines a maximum time period, during which the UE is required to monitor the reception of the measurement gap skipping indication for determining skipping of a certain measurement gap occasion.

### Second solution - Measurement gap skipping and collision handling

The second solution, is applicable to scenarios where two or more measurement gaps (e.g. configured according to different MG configurations) overlap or collide in time, and where a measurement gap skipping indication points to skipping at least one of the overlapping measurement gaps. The second solution may for example applied together with the MG skipping determination procedures as described for the first solution or any variant thereof, but may also be applied with MG skipping determination procedures, which use different MG skipping rules, for example the first MG skipping rule described with respect to Fig. 3.

In the second solution a collision of two or more measurement gaps may be handled by the UE by using a collision handling rule, which may prescribe, which of the two or more colliding measurement gaps are to be used and which of the two or more colliding measurement gaps are to be skipped according to a characteristic value of each of the plurality of colliding measurement gaps.

The characteristic value may for example be a measurement gap (MG) priority value and the collision handling rule may prescribe to skip at least one of a plurality of overlapping measurement gaps according to the MG priority values of the overlapping measurement gaps. Here, the term *"priority value"* or "priority level" refers to an index, which indicates an order of importance of the overlapping measurement gaps. The priority value can be assigned to a measurement gap configuration and can serve as a measure of the importance of measurement gaps being configured according to that measurement gap configuration. The priority value of a measurement gap could be determined as a configuration parameter included in the measurement gap configuration. Alternatively, the priority value of a measurement gap could be determined from priority information received by the UE in a DCI message or a MAC CE message. For example, the collision handling rule may prescribe to skip, among a plurality of overlapping measurement gaps, the (one or more) measurement gap(s), to which the lowest priority level(s) is (are) assigned. Then, the UE compares the priority levels of the overlapping measurement gaps. Based on the result of the comparison, the UE determines to drop the MG(s), to which the lowest priority level(s) is (are) assigned.

Alternatively, the characteristic value may be a measurement gap (MG) duration and the collision handling rule may prescribe to skip at least one of a plurality of overlapping measurement gaps according to the MG durations of the overlapping measurement gaps. For example, the collision handling rule may prescribe to skip, among a plurality of overlapping measurement gaps, the (one or more) measurement gap(s), which is (are) configured with the shortest measurement gap (MG) duration(s). Then, the UE compares the MG durations of the overlapping measurement gaps. Based on the result of the comparison, the UE determines to drop the MG(s), which is (are) configured with the shortest measurement gap (MG) duration(s).

In the following, different variants of the Second solution, which define an order for applying the collision handling and for applying a measurement gap skipping indication to a plurality of overlapping measurement gaps, for cases where the measurement gap skipping indication points to skipping at least one of the overlapping measurement gaps. Hereby, in the first variant, the UE (and the base station) when determining the measurement gaps to be skipped, first performs the collision handling and afterwards applies the measurement gap skipping according to the measurement gap skipping indication. In the second variant, the UE (and the base station) when determining the measurement gaps to be skipped, first applies the measurement gap skipping according to the measurement gap skipping indication and afterwards performs the collision handling.

### First variant of the Second solution

According to the first variant of the Second solution, in case the measurement gap skipping indication is applicable to a plurality of measurement gaps, the circuitry of the communication apparatus (e.g. of a UE), in operation, in a first step determines to skip at least one of the plurality of measurement gaps, to which the measurement gap skipping indication is applicable, according to a characteristic value of each of the plurality of measurement gaps and a collision handling rule, and in a second step determines to skip at least one of the plurality of measurement gaps, to which the measurement gap skipping indication is applicable, according to the measurement gap skipping indication. In other words, in the first variant of the Second solution the UE in the first step applies the collision handling rule to the overlapping measurement gaps and in the second step applies the measurement gap skipping indication to the remaining ones of the overlapping measurement gaps. As a result, in the first variant of the Second solution all of the overlapping measurement gaps may be skipped.

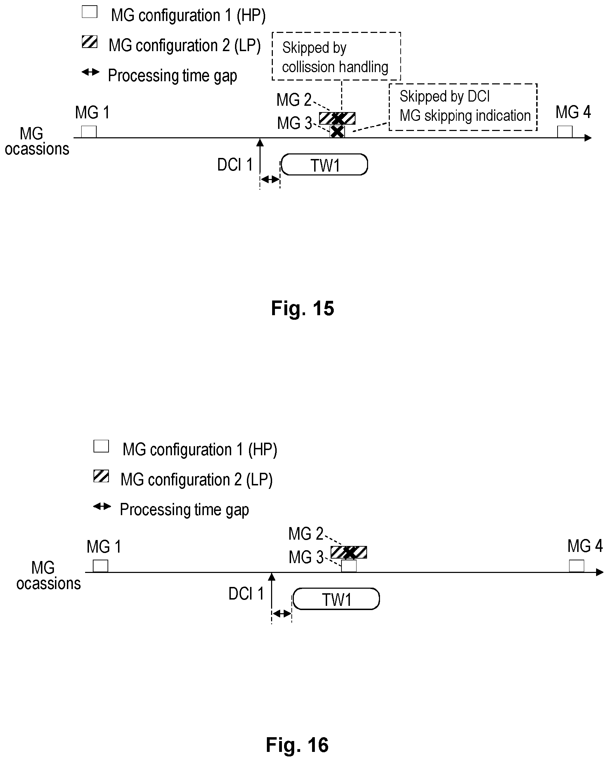

Fig. **15** illustrates an exemplary implementation of the improved measurement gap skipping procedure according to the first variant of the second solution. In the illustrated example, the UE has configured MG occasions according to a first MG configuration (MG configuration 1) with a measurement gap length of 2.5 ms and a measurement gap periodicity of 40 ms and with a high priority (HP) level and has configured MG occasions according to a second MG configuration (MG configuration 2) with a measurement gap length of 6 ms and a larger measurement gap periodicity and a low priority (LP) level. Here, the measurement gap occasion MG 3, which is configured according to MG configuration 1 and the measurement gap occasion MG 2, which is configured according to MG configuration 2 overlap in time. In addition, measurement skipping is performed according to the second variant of the First solution, so that a MG skipping time period TW1, which is associated with the measurement gap skipping indication received in DCI message DCI 1, also indicates to skip the overlapping measurement gap occasions MG 2 and MG 3.

In this example, the UE in the first step performs collision handling and determines to skip the measurement gap occasion among the overlapping measurement gap occasions, which has the lowest priority level (as the characteristic value of the measurement gaps). Accordingly, in the first step, the UE determines to skip measurement gap occasion MG 2 (as illustrated by the "X" in Fig. 15), which has a lower priority level than measurement gap occasion MG 3. In a second step, the UE applies measurement skipping according to the measurement gap skipping indication received in DCI message DCI 1 on the remaining measurement gap occasions and accordingly determines to also skip measurement gap occasion MG 3 (as illustrated by the "X" in Fig. 15), which overlaps with the MG skipping period TW1 associated with the measurement gap skipping indication received in DCI message DCI 1. As a result, the UE determines to skip both of the overlapping measurement gap occasions MG 2 and MG 3.

Consequently, the first variant of the Second solution facilitates the application of a common processing order in a base station and in a UE for determining the skipping of overlapping measurement gaps when a measurement gap skipping indication points towards the overlapping measurement gaps. This facilitates allowing a base station and a UE to have a common understanding for skipping overlapping measurement gaps based on the transmission and reception of a measurement gap indication.

### Second variant of the Second solution

According to the second variant of the Second solution, in case the measurement gap skipping indication is applicable to a plurality of measurement gaps, the circuitry of the communication apparatus (e.g. of a UE), in operation, in a first step determines to skip at least one of the plurality of measurement gaps, to which the measurement gap skipping indication is applicable, according to the measurement gap skipping indication, and, in a second step determines to skip at least one of the remaining plurality of measurement gaps according to a characteristic value of each of the plurality of measurement gaps and a collision handling rule. In other words, in the second variant of the Second solution the UE in the first step applies the measurement skip indication to the overlapping measurement gaps, and in the second step applies the collision handling rule to the remaining ones of the overlapping measurement gaps. As a result, in the second variant of the Second solution at least one of the overlapping measurement gaps may not be skipped.

Fig. 16 illustrates a first exemplary implementation of an improved measurement gap skipping procedure according to the second variant of the Second solution. In the illustrated example, the UE has again configured MG occasions according to a first MG configuration (MG configuration 1) with a measurement gap length of 2.5 ms and a measurement gap periodicity of 40 ms and with a high priority (HP) level and has configured MG occasions according to a second MG configuration (MG configuration 2) with a measurement gap length of 6 ms and a larger measurement gap periodicity and a low priority level. Here, the measurement gap occasion MG 3, which is configured according to MG configuration 1 and the measurement gap occasion MG 2, which is configured according to MG configuration 2 overlap in time. In addition, measurement skipping is performed according to the second variant of the First solution, so that a MG skipping time period TW1, which is associated with the measurement gap skipping indication received in DCI message DCI 1, also indicates to skip the overlapping measurement gap occasions MG 2 and MG 3.

In this example, the UE in the first step applies measurement skipping according to the measurement gap skipping indication received in DCI message DCI 1 on the overlapping measurement gap occasions measurement gap occasions MG 2 and MG 3. Here, it is for defined that the measurement gap skipping indication is applied to the earlier one of overlapping measurement gap occasions, so that the UE determines to skip measurement gap occasion MG 2 (as illustrated by the "X" in Fig. 16). In a second step, the UE performs collision handling. Because measurement gap occasion MG 2 is already determined to be skipped, there are no colliding measurement gap occasions remaining after the first step has been performed, so that measurement gap occasion MG 3 is not skipped. As a result, the UE determines to skip measurement gap occasion MG 2 and to apply measurement gap occasion MG 3.

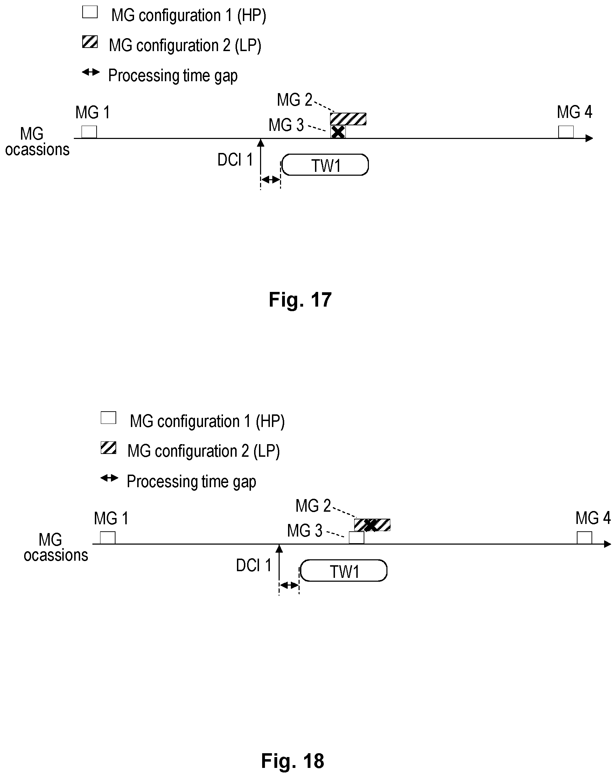

**Fig. 17** illustrates a second exemplary implementation of an improved measurement gap skipping procedure according to the second variant of the Second solution. In the illustrated example, the measurement gap occasions MG 1 to MG 4 are configured with the same parameters as described for Fig. 16, but the measurement gap occasions MG 2 and MG 3 start at the same timing. Again measurement skipping is performed according to the second variant of the First solution, so that a MG skipping time period TW1, which is associated with the measurement gap skipping indication received in DCI message DCI 1, also indicates to skip the overlapping measurement gap occasions MG 2 and MG 3.

In this example, the UE in the first step applies measurement skipping according to the measurement gap skipping indication received in DCI message DCI 1 on the overlapping measurement gap occasions measurement gap occasions MG 2 and MG 3. In the second variant of the First solution, it may be defined that the measurement gap skipping indication is applied to a shorter one of overlapping measurement gap occasions, when the overlapping measurement gap occasions have a same starting point in time, so that in this case the UE determines to skip measurement gap occasion MG 3 (as illustrated by the "X" in Fig. 17). In a second step, the UE performs collision handling. Because measurement gap occasion MG 3 is already determined to be skipped, there are no colliding measurement gap occasions remaining after the first step has been performed, so that measurement gap occasion MG 2 is not skipped. As a result, the UE determines to skip measurement gap occasion MG 3 and to apply measurement gap occasion MG 2.

Consequently, the second variant of the Second solution facilitates the application of a common processing order in a base station and in a UE for determining the skipping of overlapping measurement gaps when a measurement gap skipping indication points towards the overlapping measurement gaps. This facilitates allowing a base station and a UE to have a common understanding for skipping overlapping measurement gaps based on the transmission and reception of a measurement gap indication.

### Third solution - Selective measurement gap skipping

In the Third solution, the UE (and the base station) may determine to apply measurement gap skipping only to measurement gaps, which are configured with certain measurement gap configuration parameters. The third solution may for example applied together with the MG skipping determination procedures as described for the first solution or any of the variants thereof and with the MG skipping determination procedures as described for the second solution or any of the variants thereof, but may also be applied with MG skipping determination procedures, which use different MG skipping rules, for example the first MG skipping rule described with respect to Fig. 3.

According to a first exemplary implementation of the Third solution, the circuitry of the communication apparatus (e.g. of a UE), in operation, determines, to skip at least one measurement gap among the plurality of configured measurement gaps according to at least one measurement gap configuration parameter of each of the plurality of configured measurement gaps, wherein the at least one measurement gap configuration parameter includes one or a combination of a priority value of the measurement gap, a length of the measurement gap, and a frequency range, for which the measurement gap is applied. In other words, in the first exemplary implementation of the Third solution, the UE may apply the measurement gap skipping indication only to measurement gap occasions, which are configured with a certain characteristic value, and may determine to only skip such measurement gap occasions.

For example, the characteristic value may be measurement gap configuration, such as gapUE, gapFR1, and gapFR2, and the UE may determine to only skip measurement gap occasions being configured according to a specific measurement gap configuration. With such an implementation, the UE may determine to only skip measurement gap occasions being configured for a specific frequency range, for which the measurement gap is configured. In another example, the characteristic value may be a priority level of the measurement gap configuration, such as high priority (HP) and low priority (LP), and the UE may determine to only skip measurement gap occasions being configured with a specific priority level. In another example, the characteristic value may be a length of the measurement gap, and the UE may determine to only skip measurement gap occasions being configured with a specific measurement gap length (for example longer or shorter than a threshold value).

The characteristic value of the measurement gaps according to which the measurement gap indication is applied can be pre-configured (e.g. in a firmware of the UE) or may be received from a base station in an individual configuration information e.g. included in a DCI message, a MAC CE message, or a RRC message.

Fig. 18 illustrates an exemplary implementation of an improved measurement gap skipping procedure according to the third solution. In the illustrated example, the UE has configured MG occasions according to a first MG configuration (MG configuration 1) with a measurement gap length of 2.5 ms and a measurement gap periodicity of 40 ms and with a high priority level (HP) and has configured MG occasions according to a second MG configuration (MG configuration 2) with a measurement gap length of 6 ms and a larger measurement gap periodicity and a low priority level. Here, the measurement gap occasion MG 3, which is configured according to MG configuration 1 and the measurement gap occasion MG 2, which is configured according to MG configuration 2 overlap in time. In addition, measurement skipping is performed according to the second variant of the First solution, so that a MG skipping time period TW1, which is associated with the measurement gap skipping indication received in DCI message DCI 1, also indicates to skip the overlapping measurement gap occasions MG 2 and MG 3. In the illustrated example, the measurement gap skipping indication received in DCI message DCI 1 is configured to be applied only to measurement gap occasions, which have a low priority level, so that the UE determines to only skip measurement gap occasion MG 2 (as indicated by the "X" in Fig. 18).

According to a second exemplary implementation of the Third solution, the circuitry of the communication apparatus (e.g. of a UE), in operation, determines, to skip at least one measurement gap among the plurality of configured measurement gaps according to a format of a channel that is used for the reception of the measurement gap skipping indication. In other words, in the second exemplary implementation of the Third solution, the measurement gap configuration, to which a received measurement gap skipping indication is applied, could be different for different DCI formats. Accordingly, in the second exemplary implementation of the Third solution, the UE may determine a measurement gap to be skipped according to the DCI format of the DCI message, which includes the measurement gap skipping indication.

For example, as a rule it may be configured (by RRC signaling) to the UE, or indicated by MAC CE signaling or dynamical signaling, that a measurement gap skipping indication received in a DCI with format DCI 0_1 or DCI 0_2, which are used for scheduling PUSCH transmissions, is applicable to a measurement gap occasion configured with high priority level and that a measurement gap skipping indication received in a DCI with format DCI 1_1 or DCI 1_2, which are used for scheduling PDSCH transmissions, is applicable to a measurement gap occasion configured with low priority level. Alternatively, as a rule it may be configured by RRC signaling to the UE, or indicated by MAC CE signaling or dynamical signaling, that a measurement gap skipping indication received in a DCI with format DCI 0_2 or DCI 1_2, which are used for scheduling URLLC transmissions with high latency requirements, is applicable to a measurement gap occasion configured with high priority level and that a measurement gap skipping indication received in a DCI with format DCI 1_1 or DCI 1_2, which are used for scheduling transmissions with lower latency requirements, is applicable to a measurement gap occasion configured with low priority level.

Consequently, the Third solution facilitates enhancing the flexibility for the base station to indicate the UE to skip individual measurement gap occasions.

### FURTHER IMPLEMENTATIONS

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate ULand DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

Fig. 19 illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Further Variants, including Hardware and Software Implementation of the present disclosure

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), Vehicle to Everything (V2X) communication, and communication between an Ambient loT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PORCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### (Ambient loT)

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

### (Hardware and Software Implementation)

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, there is provided a communication apparatus, comprising a transceiver, which in operation, receives one or more signals conveying a measurement gap skipping indication, which indicates to skip at least one measurement gap, MG, and circuitry, which in operation, determines, by using a reception timing of the measurement gap skipping indication, to skip at least one measurement gap among a plurality of configured measurement gaps, which are configured in a time period following the reception timing of the measurement gap skipping indication.

According to a second aspect, provided in addition to the first aspect, the circuitry, in operation, determines to skip the at least one measurement gap by using a MG skipping time period, which is valid for a skipping duration. In an optional implementation, the skipping duration corresponds to a duration of at least one time resource unit. In another optional implementation, the time resource unit is one or a combination of radio frames, sub-frames, slots or symbols.

According to a third aspect, provided in addition to the second aspect, the circuitry, in operation, configures a pattern of a plurality of MG skipping time periods, wherein the circuitry, in operation, in response to receiving the measurement gap skipping indication within one of the plurality of MG skipping time periods, determines to skip at least one of the measurement gaps being associated with the one of the plurality of MG skipping time periods, which is valid during the reception timing of the measurement gap skipping indication.

According to a fourth aspect, provided in addition to the third aspect, the pattern of the plurality of MG skipping time periods includes a plurality of non-overlapping MG skipping time periods and each of the plurality of configured measurement gaps is associated with one or more of the plurality of MG skipping time periods.

According to a fifth aspect, provided in addition to the third aspect, the pattern of the plurality of MG skipping time periods includes a plurality of overlapping MG skipping time periods, and the circuitry, in operation, in response to receiving the measurement gap skipping indication within a plurality of overlapping MG skipping time periods, selects to skip at least one of the one or more measurement gaps being associated with the overlapping MG skipping time periods according to a first order rule, which defines to consider the chronological order of the plurality of overlapping MG skipping time periods. In an optional implementation, the first order rule defines to skip at least one of the one or more measurement gaps being associated with the latest of the overlapping MG skipping time periods, which starts later than the remaining overlapping MG skipping time periods, and not to skip the measurement gaps being associated with the remaining overlapping MG skipping time periods. In another optional implementation, the first order rule defines to skip at least one of the one or more measurement gaps being associated with the earliest of the overlapping MG skipping time period, which starts earlier than the remaining overlapping MG skipping time periods, and not to skip the measurement gaps being associated with the remaining overlapping MG skipping time periods.

According to a sixth aspect, provided in addition to the second aspect, the MG skipping time period is associated with the received measurement gap skipping indication, and the circuitry, in operation, determines a starting point of the MG skipping time period based on the reception timing of the received measurement gap skipping indication. In an optional implementation, the circuitry, in operation, determines the starting point of the MG skipping time period by adding an offset time to the reception timing of the received measurement gap skipping indication.

According to a seventh aspect, provided in addition to the sixth aspect, the circuitry, in operation, in response to receiving the measurement gap skipping indication, determines to skip at least one of the configured measurement gaps, which at least partly overlap with the MG skipping time period being associated with the received measurement gap skipping indication. In an optional implementation, the circuitry, in operation, in response to receiving the measurement gap skipping indication, determines to skip at least one of the measurement gaps, which have a MG starting point during the skipping duration of the MG skipping time period being associated with the received measurement gap skipping indication.

According to an eighth aspect, provided in addition to the second aspect, the MG skipping time period is associated with a configured measurement gap, and the circuitry, in operation, determines a starting point of a MG skipping time period based on the MG starting point of the associated measurement gap. In an optional implementation, the circuitry, in operation, determines the starting point of the MG skipping time period by subtracting an offset time from the MG starting point of the associated measurement gap.

According to a ninth aspect, provided in addition to the first eighth aspect, the circuitry, in operation, in response to receiving the measurement gap skipping indication within the MG skipping time period, determines to skip the associated measurement gap. In an optional implementation, the circuitry, in operation, in response to receiving the measurement gap skipping indication during the skipping duration of a plurality of overlapping MG skipping time periods, determines to skip all of the measurement gap being associated with at least one of the overlapping MG skipping time periods. In another optional implementation, the circuitry, in operation, in response to receiving the measurement gap skipping indication during the skipping duration of a plurality of overlapping MG skipping time periods, selects to skip at least one of the one or more measurement gaps being associated with at least one of the overlapping MG skipping time periods according to a second order rule, which defines to consider the chronological order of the plurality of overlapping MG skipping time periods.

According to a tenth aspect, provided in addition to any of the first to ninth aspects, in case the measurement gap skipping indication is applicable to a plurality of measurement gaps, the circuitry, in operation, in a first step determines to skip at least one of the plurality of measurement gaps, to which the measurement gap skipping indication is applicable, according to a characteristic value of each of the plurality of measurement gaps and a collision handling rule, and the circuitry, in operation, in a second step determines to skip at least one of the plurality of measurement gaps, to which the measurement gap skipping indication is applicable, according to the measurement gap skipping indication.

According to an eleventh aspect, provided in addition to any of the first to ninth aspects, in case the measurement gap skipping indication is applicable to a plurality of measurement gaps, the circuitry, in operation, in a first step determines to skip at least one of the plurality of measurement gaps, to which the measurement gap skipping indication is applicable, according to the measurement gap skipping indication, and the circuitry, in operation, in a second step determines to skip at least one of the remaining plurality of measurement gaps according to a characteristic value of each of the plurality of measurement gaps and a collision handling rule.

According to a twelfth aspect, provided in addition to any of the tenth or eleventh aspects, the characteristic value of each of the plurality of measurement gaps is a MG priority value and the collision handling rule is a rule for skipping at least one of a plurality of overlapping measurement gaps according to the MG priority values of the overlapping measurement gaps, and/or the characteristic value of each of the plurality of measurement gaps is a MG duration and the collision handling rule is a rule for skipping at least one of a plurality of overlapping measurement gaps according to the MG durations of the overlapping measurement gaps.

According to a thirteenth aspect, provided in addition to any of the first to twelfth aspects, the circuitry, in operation, determines, to skip at least one measurement gap among the plurality of configured measurement gaps according to at least one measurement gap configuration parameter of each of the plurality of configured measurement gaps, wherein the at least one measurement gap configuration parameter includes one or a combination of a priority value of the measurement gap, a length of the measurement gap, and a frequency range, for which the measurement gap is applied.

According to a fourteenth aspect, provided in addition to any of the first to thirteenth aspects, the circuitry, in operation, determines, to skip at least one measurement gap among the plurality of configured measurement gaps according to a format of a channel that is used for the reception of the measurement gap skipping indication. In an optional implementation, the measurement gap skipping indication is received in a downlink control information, DCI, message.

According to a fifteenth aspect, there is provided a communication apparatus comprising circuitry, which in operation, generates a measurement gap skipping indication, which indicates to skip at least one measurement gap, MG, and a transceiver, which in operation, transmits one or more signals conveying the measurement gap skipping indication to a terminal. The circuitry, in operation, determines, by using a transmission timing of the measurement gap skipping indication, to skip at least one measurement gap among a plurality of configured measurement gaps, which are configured in a time period following the transmission timing of the measurement gap skipping indication.

According to a sixteenth aspect, provided in addition to the fifteenth aspect, the circuitry, in operation, determines a measurement gap among a plurality of configured measurement gaps as a measurement gap to be skipped, and determines the transmission timing of the measurement gap skipping indication, which is used to indicate to a communication apparatus, the measurement gap to be skipped.

According to a seventeenth aspect, there is provided a method comprising the following steps performed by a communication apparatus:
- receiving one or more signals conveying a measurement gap skipping indication, which indicates to skip at least one measurement gap, MG; and
- determining, by using a reception timing of the measurement gap skipping indication, to skip at least one measurement gap among a plurality of configured measurement gaps, which are configured in a time period following the reception timing of the measurement gap skipping indication.

According to an optional implementation, the method further includes one or a combination of the steps performed by the communication apparatus of any of the first to fourteenth aspects.

According to an eighteenth aspect, there is provided a method comprising the following steps performed by a communication apparatus:
- generating a measurement gap skipping indication, which indicates to skip at least one measurement gap, MG;
- transmitting one or more signals conveying the measurement gap skipping indication to a terminal; and
- determining, by using a transmission timing of the measurement gap skipping indication, to skip at least one measurement gap among a plurality of configured measurement gaps, which are configured in a time period following the transmission timing of the measurement gap skipping indication.

According to an optional implementation, the method further includes one or a combination of the steps performed by the communication apparatus of any of the fifteenth or sixteenth aspects.

According to a nineteenth aspect, there is provided an integrated circuit for controlling a process of a communication apparatus (e.g. a UE), the process including:
- receiving one or more signals conveying a measurement gap skipping indication, which indicates to skip at least one measurement gap, MG; and
- determining, by using a reception timing of the measurement gap skipping indication, to skip at least one measurement gap among a plurality of configured measurement gaps, which are configured in a time period following the reception timing of the measurement gap skipping indication.

According to an optional implementation, the process further includes one or a combination of the steps performed by the communication apparatus of any of the first to fourteenth aspects.

According to a twentieth aspect, there is provided an integrated circuit for controlling a process of a communication apparatus (e.g. a base station), the process including:
- generating a measurement gap skipping indication, which indicates to skip at least one measurement gap, MG;
- transmitting one or more signals conveying the measurement gap skipping indication to a terminal; and
- determining, by using a transmission timing of the measurement gap skipping indication, to skip at least one measurement gap among a plurality of configured measurement gaps, which are configured in a time period following the transmission timing of the measurement gap skipping indication.

According to an optional implementation, the process further includes one or a combination of the steps performed by the communication apparatus of any of the fifteenth or sixteenth aspects.

## Claims

1. A communication apparatus, comprising:
a transceiver, which in operation,
receives one or more signals conveying a measurement gap skipping indication, which indicates to skip at least one measurement gap, MG; and
circuitry, which in operation,
determines, by using a reception timing of the measurement gap skipping indication, to skip at least one measurement gap among a plurality of configured measurement gaps, which are configured in a time period following the reception timing of the measurement gap skipping indication.

2. The communication apparatus according to claim 1, wherein the circuitry, in operation, determines to skip the at least one measurement gap by using a MG skipping time period, which is valid for a skipping duration;
optionally, wherein the skipping duration corresponds to a duration of at least one time resource unit;
optionally, wherein the time resource unit is one or a combination of radio frames, sub-frames, slots or symbols.

3. The communication apparatus according to claim 2, wherein the circuitry, in operation, configures a pattern of a plurality of MG skipping time periods; and
wherein the circuitry, in operation, in response to receiving the measurement gap skipping indication within one of the plurality of MG skipping time periods, determines to skip at least one of the measurement gaps being associated with the one of the plurality of MG skipping time periods, which is valid during the reception timing of the measurement gap skipping indication.

4. The communication apparatus according to claim 3, wherein the pattern of the plurality of MG skipping time periods includes a plurality of non-overlapping MG skipping time periods and wherein each of the plurality of configured measurement gaps is associated with one or more of the plurality of MG skipping time periods.

5. The communication apparatus according to claim 3, wherein the pattern of the plurality of MG skipping time periods includes a plurality of overlapping MG skipping time periods, and wherein the circuitry, in operation, in response to receiving the measurement gap skipping indication within a plurality of overlapping MG skipping time periods, selects to skip at least one of the one or more measurement gaps being associated with the overlapping MG skipping time periods according to a first order rule, which defines to consider the chronological order of the plurality of overlapping MG skipping time periods;
optionally, wherein the first order rule defines to skip at least one of the one or more measurement gaps being associated with the latest of the overlapping MG skipping time periods, which starts later than the remaining overlapping MG skipping time periods, and not to skip the measurement gaps being associated with the remaining overlapping MG skipping time periods;
optionally, wherein the first order rule defines to skip at least one of the one or more measurement gaps being associated with the earliest of the overlapping MG skipping time period, which starts earlier than the remaining overlapping MG skipping time periods, and not to skip the measurement gaps being associated with the remaining overlapping MG skipping time periods.

6. The communication apparatus according to claim 2, wherein the MG skipping time period is associated with the received measurement gap skipping indication; and
wherein the circuitry, in operation, determines a starting point of the MG skipping time period based on the reception timing of the received measurement gap skipping indication;
optionally, wherein the circuitry, in operation, determines the starting point of the MG skipping time period by adding an offset time to the reception timing of the received measurement gap skipping indication.

7. The communication apparatus according to claim 6, wherein the circuitry, in operation, in response to receiving the measurement gap skipping indication, determines to skip at least one of the configured measurement gaps, which at least partly overlap with the MG skipping time period being associated with the received measurement gap skipping indication;
optionally, wherein the circuitry, in operation, in response to receiving the measurement gap skipping indication, determines to skip at least one of the measurement gaps, which have a MG starting point during the skipping duration of the MG skipping time period being associated with the received measurement gap skipping indication.

8. The communication apparatus according to claim 2, wherein the MG skipping time period is associated with a configured measurement gap; and
the circuitry, in operation, determines a starting point of a MG skipping time period based on the MG starting point of the associated measurement gap;
optionally, wherein the circuitry, in operation, determines the starting point of the MG skipping time period by subtracting an offset time from the MG starting point of the associated measurement gap.

9. The communication apparatus according to claim 8, wherein the circuitry, in operation, in response to receiving the measurement gap skipping indication within the MG skipping time period, determines to skip the associated measurement gap;
optionally, wherein the circuitry, in operation, in response to receiving the measurement gap skipping indication during the skipping duration of a plurality of overlapping MG skipping time periods, determines to skip all of the measurement gap being associated with at least one of the overlapping MG skipping time periods;
optionally, wherein the circuitry, in operation, in response to receiving the measurement gap skipping indication during the skipping duration of a plurality of overlapping MG skipping time periods, selects to skip at least one of the one or more measurement gaps being associated with at least one of the overlapping MG skipping time periods according to a second order rule, which defines to consider the chronological order of the plurality of overlapping MG skipping time periods.

10. The communication apparatus according to one of claims 1 to 9, wherein, in case the measurement gap skipping indication is applicable to a plurality of measurement gaps,
the circuitry, in operation, in a first step determines to skip at least one of the plurality of measurement gaps, to which the measurement gap skipping indication is applicable, according to a characteristic value of each of the plurality of measurement gaps and a collision handling rule, and
the circuitry, in operation, in a second step determines to skip at least one of the plurality of measurement gaps, to which the measurement gap skipping indication is applicable, according to the measurement gap skipping indication.

11. The communication apparatus according to one of claims 1 to 9, wherein, in case the measurement gap skipping indication is applicable to a plurality of measurement gaps,
the circuitry, in operation, in a first step determines to skip at least one of the plurality of measurement gaps, to which the measurement gap skipping indication is applicable, according to the measurement gap skipping indication, and
the circuitry, in operation, in a second step determines to skip at least one of the remaining plurality of measurement gaps according to a characteristic value of each of the plurality of measurement gaps and a collision handling rule.

12. The communication apparatus according to one of claims 10 or 11, wherein the characteristic value of each of the plurality of measurement gaps is a MG priority value and the collision handling rule is a rule for skipping at least one of a plurality of overlapping measurement gaps according to the MG priority values of the overlapping measurement gaps, and/or
wherein the characteristic value of each of the plurality of measurement gaps is a MG duration and the collision handling rule is a rule for skipping at least one of a plurality of overlapping measurement gaps according to the MG durations of the overlapping measurement gaps.

13. The communication apparatus according to one of claims 1 to 12, wherein the circuitry, in operation, determines, to skip at least one measurement gap among the plurality of configured measurement gaps according to at least one measurement gap configuration parameter of each of the plurality of configured measurement gaps,
wherein the at least one measurement gap configuration parameter includes one or a combination of a priority value of the measurement gap, a length of the measurement gap, and a frequency range, for which the measurement gap is applied.

14. The communication apparatus according to one of claims 1 to 13, wherein the circuitry, in operation, determines, to skip at least one measurement gap among the plurality of configured measurement gaps according to a format of a channel that is used for the reception of the measurement gap skipping indication;
optionally, wherein the measurement gap skipping indication is received in a downlink control information, DCI, message.

15. A communication apparatus comprising:
circuitry, which in operation, generates a measurement gap skipping indication, which indicates to skip at least one measurement gap, MG; and
a transceiver, which in operation, transmits one or more signals conveying the measurement gap skipping indication to a terminal;
wherein the circuitry, in operation, determines, by using a transmission timing of the measurement gap skipping indication, to skip at least one measurement gap among a plurality of configured measurement gaps, which are configured in a time period following the transmission timing of the measurement gap skipping indication.
